# EUROPÄISCHE PATENTSCHRIFT

(11) **EP 3 789 180 B1**
(45) Veröffentlichungstag und Bekanntmachung des Hinweises auf die Patenterteilung: **06.07.2022**
(21) Anmeldenummer: 20204459.0
(22) Anmeldetag: 06.04.2018
(51) Int. Cl.: B29C 49/46, B29C 49/42, B65B 3/02, B65B 7/28, B67B 3/20, B29C 49/06, B29C 49/36, B29C 49/12, B29K 67/00, B29L 31/00, B65D 41/04, B65D 41/18, B65D 1/02

(54) **VERFAHREN SOWIE VORRICHTUNG ZUM HERSTELLEN VON MIT EINEM FLÜSSIGEN FÜLLGUT GEFÜLLTEN UND MIT EINER VERSCHLUSSKAPPE VERSCHLOSSENEN BEHÄLTERN**
METHOD AND DEVICE FOR PRODUCING CONTAINERS FILLED WITH A LIQUID FILLING MATERIAL AND SEALED BY MEANS OF A SEALING CAP
PROCÉDÉ ET DISPOSITIF POUR FABRIQUER DES CONTENANTS REMPLIS D'UN PRODUIT DE REMPLISSAGE LIQUIDE ET FERMÉS AVEC UN BOUCHON DE FERMETURE

(30) Priorität: 07.04.2017 DE 102017003410
(43) Veröffentlichungstag der Anmeldung: 10.03.2021
(62) Teilanmeldung aus: 18718739.8
(73) Patentinhaber: KHS GmbH, 44143 Dortmund (DE)
(72) Erfinder: LINKE, Michael, 22159 Hamburg (DE); BAUMGARTE, Rolf, 22926 Ahrensburg (DE); LITZENBERG, Michael, 21039 Börnsen (DE); VAN HAMME, Thomas, 24629 Kisdorf (DE)
(74) Vertreter: Eisenführ Speiser

(56) Entgegenhaltungen:
- EP-A1- 2 949 585
- BE-A- 852 384
- DE-U1- 29 505 167
- FR-A1- 2 128 147
- US-A1- 2012 266 567

## Beschreibung

Die Erfindung betrifft ein Verschließsystem nach Patentanspruch 1 sowie eine Verwendung eines solchen Verschließsystems nach Patentanspruch 5.

Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden (DE 43 40 291 A1). Typischerweise weist eine Blasmaschine eine Heizeinrichtung zum Temperieren bzw. zum thermischen Konditionieren der Vorformlinge sowie eine Blaseinrichtung mit wenigstens einer Blasstation auf, in deren Bereich der jeweils zuvor temperierte Vorformling zu einem Behälter expandiert wird. Die Expansion erfolgt mit Hilfe eines Druckgases (Druckluft) als Druckmedium, das mit einem Formdruck in den zu expandierenden Vorformling eingeleitet wird. Der verfahrenstechnische Ablauf bei einer derartigen Expansion des Vorformlings wird in der DE 43 40 291 A1 erläutert. Der grundsätzliche Aufbau einer Blasstation ist in der DE 42 12 583 A1 beschrieben. Möglichkeiten der Temperierung der Vorformlinge sind in der DE 23 52 926 A1 erläutert. Unter Temperierung oder thermischer Konditionierung wird dabei verstanden, dass der Vorformling auf eine für die Blasumformung geeignete Temperatur erwärmt und ggf. ein Temperaturprofil dem Vorformling aufgeprägt wird. Blasformung von Behältern aus Vorformlingen unter zusätzlicher Verwendung einer Reckstange ist ebenfalls bekannt.

Gemäß einem typischen Weiterverarbeitungsverfahren werden die durch Blasformen hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d.h. zu einer verblockten Blas-Füll-Einrichtung zusammenzufassen, wobei weiterhin das Blasformen und das Füllen an gesonderten Maschinenkomponenten und zeitlich nacheinander erfolgen.

Es wurde weiterhin bereits vorgeschlagen, Behälter, insbesondere auch in Form von Flaschen, aus thermisch konditionierten bzw. temperierten Vorformlingen herzustellen und dabei gleichzeitig mit einem flüssigen Füllgut zu befüllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in den Behälter umgeformt wird. Derartige Verfahren, bei denen ein gleichzeitiges Formen und Füllen des jeweiligen Behälters erfolgt, können auch als hydraulische Umformverfahren oder als hydraulische Behälterformung bezeichnet werden. Auch hier ist es bekannt, diese Umformung durch den Einsatz einer Reckstange zu unterstützen.

Bei einem Formen der Behälter aus den Vorformlingen durch das Füllgut selbst, d.h. unter Verwendung des Füllgutes als hydraulisches Druckmedium, wird für das Formen und Füllen der Behälter nur noch eine Maschine benötigt, die dafür allerdings eine erhöhte Komplexität aufweist. Ein Beispiel für eine solche Maschine zeigt die US 7,914,726 B2. Ein weiteres Beispiel zeigt die DE 2010 007 541 A1.

Es ist weiterhin bekannt, dass befüllte Behälter in einem anschließenden Arbeitsgang von Verschließeinrichtungen verschlossen werden. Dazu werden die Behälter z.B. von der Fülleinrichtung nach Abschluss der Befüllung einer Transporteinrichtung übergeben und einer Verschließeinrichtung zugeführt. Auch hier ist es bekannt, eine Verblockung der Verschließeinrichtung mit vorhergehenden Maschinen vorzusehen.

Es sind auch Maschinen bekannt, bei denen Behälter in der gleichen Maschine mehreren der vorstehend genannten Behandlungen unterzogen werden. So zeigt z.B. die DE 10 2011 057 112 A1 eine Maschine mit einem im Produktionsbetrieb kontinuierlich umlaufenden Arbeitsrad, an dem umfangsverteilt Behandlungsstationen angeordnet sind fürdie Behandlung fertig ausgeformter Behälter. Das Arbeitsrad trägt dabei drei Arten von Behandlungsstationen, nämlich mehrere Füllstationen, mehrere Etikettierstationen und mehrere Verschließstationen. Diese Stationen sind alternierend angeordnet, das heißt jede dritte Station ist als Füller, Etikettierer oder Verschließer ausgeführt. Die Bearbeitung der fertig ausgeformten Behälter erfolgt mit allen drei Arten von Bearbeitungsstationen in insgesamt drei Arbeitsradumläufen, wobei die Behälter zwischen den jeweiligen Umläufen zwischen den unterschiedlichen Stationen versetzt werden, z.B. durch zwischenzeitliche Entnahme aus einer Bearbeitungsstation der einen Art und erneutes, versetztes Einsetzen auf das Arbeitsrad in eine Bearbeitungsstation einer anderen Art. Nachdem jeder Behälter in drei Umläufen mit allen drei Arten von Stationen bearbeitet worden ist, verlässt der Behälter endgültig das Arbeitsrad. Mit dieser konstruktiven Lösung wird zwar nur ein Arbeitsrad benötigt. Dieses Rad muss allerdings für das Erreichen hoher Durchsatzraten sehr groß dimensioniert werden, um eine ausreichende Anzahl an Bearbeitungsstationen anordnen zu können, und für das Erreichen einer hohen Produktionsrate muss das Arbeitsrad relativ schnell drehen, da die Umlaufzeit die Prozesszeit pro Behandlungsschritt bestimmt. Es ergeben sich insgesamt auch deutliche Handhabungserschwernisse beim Handling der Behälter, da die Behälter mehrfach vom Arbeitsrad entnommen und wieder auf das Arbeitsrad übergeben werden müssen.

Eine Problematik bei der hydraulischen Behälterformung besteht darin, dass eine Verschmutzung der jeweiligen Form- und Füllstation bzw. der diese Station bildenden Form, die ähnlich einer Blasform einer Blasformmaschine zum Herstellen von Behältern aus thermisch konditionierten Vorformlingen durch Blasen mit einem Druckgas ausgeführt ist, vermieden werden muss. Speziell im Falle einer Voll- oder Teilkarbonisierung des Füllgutes besteht in besonderem Maße die Gefahr einer Verschmutzung der jeweiligen Form- und Füllstation durch Füllgutverluste. Solche Füllgutverluste können bereits bei der Absenkung des Innendrucks des Behälters auftreten, d.h. bei der Entlastung des Behälters von dem recht hohen Form- und Fülldruck auf den Umgebungsdruck. Derartige Füllgutverluste sind insbesondere durch eine massive Schaumbildung beim Entlasten bedingt, sodass das gleichzeitige Formen und Füllen von Behältern unter Verwendung von Vorformlingen und unter Verwendung des Füllgutes als Druckmedium (hydraulische Ausformtechnik), insbesondere für C02-haltige Produkte eine besondere Herausforderung darstellt.

Füllgutverluste können auch dadurch auftreten, dass gefüllte Behälter aus der Form- und Füllstation entnommen werden müssen und sich dabei Richtungsänderungen im Handhabungsverlauf der Behälter ergeben. Gerade bei auf im Produktionsbetrieb kontinuierlich rotierenden Arbeitsrädern angeordneten Füllstationen ergeben sich entnahmebedingt veränderliche Beschleunigungen auf die Behälter und deren Inhalt. Bei den gewünschten hohen Produktionszahlen drehen diese Arbeitsräder schnell und es ergeben sich entsprechend hohe Beschleunigungen auf Behälter und Behälterinhalt. Es kann dabei zu einem Flüssigkeitsaustritt kommen. Die austretende Flüssigkeit kann dabei z.B. die Form für die Behälterformung verunreinigen und es kann dadurch zu Qualitätsmängeln bei den hergestellten Behältern und zu Ausschussware kommen. Der Flüssigkeitsaustritt führt auch zu hygienischen Problemen, die es zu vermeiden gilt.

Diese letztgenannten Füllgutverluste können wirksam dadurch vermieden werden, dass die Behälter unmittelbar nach ihrer Befüllung, aber noch auf dem Arbeitsrad für die Befüllung verschlossen werden. Bekannt ist dies z.B. aus der DE 10 2010 007 541 A1 und aus der WO 2012/104019 A1. In beiden Dokumenten werden gefüllte Behälter noch innerhalb der Form- und Füllstation, in der ein Vorformling durch Einleiten des Füllgutes unter Druck in einen Behälter umgeformt wird, mit einem Verschluss versehen. Es werden dazu Verschlusskappen von einer Kappenzuführung zu den Form- und Füllstationen zugeführt und auf die gefüllten Behälter aufgesetzt, nachdem der Form- und Füllkopf, in den genannten Dokumenten als Anschlusselement bezeichnet, nach Beendigung des Formvorgangs von der Behältermündung abgehoben wurde, aber bevor der gefüllte Behälter aus der Form- und Füllstation entnommen wurde. Es ist dazu eine Verschließeinrichtung vorgesehen, die entweder koaxial und drehbeweglich relativ zum Form- und Füllkopf angeordnet ist, oder der Form- und Füllkopf wird zusammen mit der Verschließeinrichtung von einem Werkzeugträger gehalten und abwechselnd in einer Arbeitsanordnung oder in einer Ruheanordnung positioniert. Die Verschließeinrichtung schraubt bei beiden dort gezeigten Varianten eine Schraubverschlusskappe auf den gefüllten Behälter.

Aus der DE 295 05 167 U1 ist ein Verschließsystem bekannt bestehend aus einer Flasche und einem Schraubverschluss. Lediglich die Flasche weist im Halsbereich Gewindezüge auf und die Kappe soll radial nach innen ragende Längsrippen aufweisen. Die Kappe wird von oben auf die Flaschenmündung gedrückt. Die Längsrippen sind aus einem weichen Material, die sich den Gewindezügen im Halsbereich der Flasche anpassen. Dadurch werden Gewindezüge in diese Längsrippen eingeprägt. Vergleichbare Verschließsysteme zeigen die FR 2 128 147 A3 und die BE 852 384 A.

Aufgabe der Erfindung ist es, eine Vorrichtung aufzuzeigen, welche das Verschließen der ausgeformten und gefüllten Behälter noch innerhalb der Form- und Füllstation weiter verbessert und weiter vereinfacht.

Zur Lösung dieser Aufgabe ist ein Verschließsystem entsprechend dem Patentanspruch 1 ausgebildet. Eine Verwendung eines Verschließsystems ist Gegenstand des Patentanspruchs 5. Vorteilhafte Weiterbildungen sind Gegenstand der Unteransprüche.

Ein zur Verwendung im Rahmen der Erfindung geeignetes Verschließsystem aus einem Behälter und einer Schraubverschlusskappe ist wie im Stand der Technik so ausgeführt, dass die Verschlusskappe auf den Behälter aufgeschraubt und/oder abgeschraubt werden kann. Dazu ist zwischen dem Behälter und der Verschlusskappe in einem Verbindungsbereich eine Schraubverbindung ausbildbar, indem dort entsprechende Gewindezüge und/oder Gewindefurchen ausgebildet sind. Dabei ist erfindungsgemäß vorgesehen , dass einer der Partner der Schraubverbindung im Bereich der Schraubverbindung zunächst gewindefrei ausgeführt ist. Der andere Verbindungspartner weist hingegen in diesem Verbindungsbereich ein Gewinde mit als Schneidmittel ausgebildeten, scharfkantigen Gewindezügen auf. Wenn die Verschlusskappe wie später noch ausgeführt und bevorzugt auf den Behälter aufgedrückt wird, dann erweist sich die gewindefreie Ausbildung eines der beteiligten Verbindungsbereiche als vorteilhaft, weil die Verschlusskappe mit verringertem Widerstand aufpressbar ist. Beim Abschrauben der Verschlusskappe tritt dann die gewindeschneidende Wirkung der scharfkantigen Gewindezüge in Erscheinung, nämlich indem dabei in dem vormals gewindefreien Bereich nunmehr Gewindefurchen eingeschnitten werden.

Hierfür bestehen zwei Möglichkeiten. Einerseits kann vor dem Verschließen des Behälters mit der Verschlusskappe der kappenseitig angeordnete Verbindungsbereich des Behälters gewindefrei ausgebildet sein. Dann weist der behälterseitig angeordnete Verbindungsbereich der Verschlusskappe ein Gewinde mit als Schneidmittel ausgebildeten, scharfkantigen Gewindezügen auf. Kappenseitig und behälterseitig angeordnet ist zu verstehen als der Kappe bzw. dem Behälter zugewandte Seite. Andererseits kann vordem Verschließen des Behälters mit der Verschlusskappe der kappenseitig angeordnete Verbindungsbereich des Behälters mit einem Gewinde mit als Schneidmittel ausgebildeten, scharfkantigen Gewindezügen ausgebildet sein. Dann ist der behälterseitig angeordnete Verbindungsbereich der Verschlusskappe gewindefrei ausgebildet. In beiden Fällen sind die als Schneidmittel ausgebildeten, scharfkantigen Gewindezüge bevorzugt aus einem Material mit größerer Härte, insbesondere mit einer größeren Shore-Härte, ausgeführt als der gewindefreie Verbindungsbereich, insbesondere mit einer größeren Shore-Härte als bei der blasformenden Herstellung von Behältern aus Vorformlingen verwendete thermoplastische Kunststoffe, insbesondere als PET. Dies verbessert die Schneidwirkung in vorteilhafter Weise. Ziel der vorstehenden Merkmale ist, dass beim Abschrauben der Verschlusskappe vom Behälter die als Schneidmittel ausgebildeten, scharfkantigen Gewindezüge Gewindefurchen in den gewindefreien Verbindungsbereich einschneiden.

Eine Verschlusskappe zur Verwendung in einem wie vorstehend beschriebenen Verschließsystem weist entsprechend auf seiner Verschlusskappeninnenseite als Schneidmittel ausgebildete, scharfkantige Gewindezüge auf, bevorzugt aus einem Material mit einer größeren Härte, insbesondere mit einer größeren Shore-Härte, als bei der blasformenden Herstellung von Behältern aus Vorformlingen verwendete thermoplastische Kunststoffe, insbesondere als PET.

Für das Aufdrücken bzw. Aufpressen dieser Kappen auf einen Behälter ist von Vorteil, wenn die Gewindezüge erfindungsgemäß segmentiert ausgeführt sind, wobei bevorzugt ein um 360° umlaufender Gewindezug auf dieser Umlaufstrecke in mehr als 4, vorzugsweise in mehr als 6, weiter vorzugsweise in mehr als 8 Segmente unterteilt ist. Dies erleichtert die radiale Aufweitung der Kappe im Zuge des Aufdrückens auf den Behälter.

Ein Vorteil der vorstehend erläuterten Verschlusskappe und des vorstehend erläuterten Verschließsystems ist, dass durch die erfindungsgemäßen Merkmale unerheblich ist, welche Stellung in Umfangsrichtung beide Partner beim Aufpressen zueinander haben. Dies ist anders, wenn beide Partner beim Aufpressen bereits über die miteinander wechselwirkenden Gewinde bzw. Gewindefurchen verfügen. In aufgepresster Position wird sich durch die Vorspannkraft der Gewindezüge beim Losdrehen eine Axialkraft in Löserichtung aufbauen, in die sich die Verschlusskappe abschrauben lässt. In ähnlicher Weise ist dies bei Rollringgetrieben bekannt, bei dem auf eine glatte runde Stange eine Axialkraft ausgeübt wird.

Bei bevorzugten Verfahren und gleichermaßen bei einer bevorzugten Vorrichtung zum Herstellen von mit einem flüssigen Füllgut gefüllten und mit einer Verschlusskappe verschlossenen Behältern erfolgt das Anbringen des Verschlusses auf dem Behälter unter Zuhilfenahme des Form- und Füllkopfes. Es wird dabei eine Verschlusskappe auf den Mündungsbereich des fertig geformten und gefüllten Behälters gedrückt. In der Regel weisen Behälter und Verschlusskappe jeweils zusammenwirkende Konturen auf, um die Verschlusskappe auf dem Behälter festzuhalten. Dies können beispielsweise Gewindegänge oder in Umfangsrichtung verlaufende Wülste, Nuten, Kragen oder dergleichen sein. Bevorzugt ist vorgesehen, dass die Verschlusskappe nach dem Aufdrücken den Behälter zumindest vorläufig verschließt. Hierunter wird im Rahmen der Erfindung insbesondere verstanden, dass die Verschlusskappe derart auf den Behälter gedrückt wird, dass sie sich während der üblichen weiteren Handhabung nicht unbeabsichtigt vom Behälter lösen kann. In der Regel wird dies dadurch erreicht, dass die an Behälter und/oder Verschlusskappe vorgesehenen Konturen sich nach dem Aufdrücken wenigstens teilweise im gegenseitigen Eingriff befinden bzw. durch das Aufdrücken in Eingriff gebracht wurden. Beispielsweise gleiten die Konturen während des Aufdrückens radial versetzt aneinander vorbei. Damit unterscheidet sich das erfindungsgemäße Aufdrücken insbesondere von einem für Schraubverschlüsse sonst üblichen Schrauben, bei dem die Gewindekonturen jederzeit radial überlappend und nicht radial versetzt zueinander bewegt werden.

Bevorzugt ist vorgesehen, dass der Form- und Füllkopf nach Abschluss der Form- und Füllphase, also bei Vorliegen eines vollständig umgeformten und gefüllten Behälters, zunächst von der Abdichtpositionierung in eine vom Behälter beabstandete Positionierung bewegt wird. Die Abdichtpositionierung ist diejenige Positionierung, die während der Form- und Füllphase eingenommen wird und ist dadurch gekennzeichnet, dass der Form- und Füllkopf abdichtend am Vorformling oder an der Form anliegt, um unter dem erforderlichen Fülldruck das Füllgut in den Vorformling einspeisen zu können. In der vom Behälter beabstandeten Positionierung kann dann eine Verschlusskappe in den Bereich zwischen Behälter und Form- und Füllkopf zugeführt werden und dann nachfolgend die Verschlusskappe vom Form- und Füllkopf in einer Behälterlängsrichtung auf den Behälter aufgedrückt werden. Dieses Aufdrücken der Verschlusskappe kann z.B. bis zu einer ersten Dichtposition erfolgen, die lediglich sicherstellt, dass während der Handhabung des Behälters während der Entnahme vom Arbeitsrad keine Füllgutverluste eintreten. Es könnte vorgesehen sein, dass in einem späteren Verschließschritt die Verschlusskappe erst in die endgültige Verschließposition gebracht wird. Es ist aber auch möglich, dass bereits in der Form- und Füllstation der Schraubverschluss in seine endgültige Schließposition gebracht wird, z.B. indem er vollständig auf den Behälter gedrückt wird bis zum Erreichen der endgültigen Schließposition. Gegenüber bisher bekannten Form- und Füllköpfen ist insbesondere eine steuerungstechnische Änderung vorzunehmen, damit der Form- und Füllkopf in der beschriebenen Weise die verschiedenen Positionierungen einnehmen und die geschilderten Bewegungen ausführen kann bzw. gesteuert ausführt.

Mit Vorteil wird vorgeschlagen, dass der Form- und Füllkopf auch die Aufnahme einer Verschlusskappe ausführt. Dazu weist er auf seiner der Form zugewandten Seite Aufnahmemittel für eine Verschlusskappe auf. Durch Ausführen einer Aufnahmebewegung nimmt der Form- und Füllkopf eine zugeführte Verschlusskappe auf. Diese Aufnahmebewegung kann z.B. eine Bewegung hin zu der Verschlusskappe sein. Nach erfolgter Aufnahme der Verschlusskappe erfolgt dann anschließend das Aufdrücken der Kappe auf den Behälter. Für die Realisierung dieser Bewegungen ist die Steuerung der Form- und Füllkopfbewegungen entsprechend auszuführen.

Das Aufnahmemittel kann in einfacher und dadurch bevorzugter Weise als am Form- und Füllkopf ausgebildete Ausnehmung ausgeführt sein. Diese Ausnehmung ist dabei so dimensioniert, dass eine Verschlusskappe gegen ein Verkippen gesichert aufgenommen ist. Diese Kippsicherung soll verhindern, dass der behälterzugewandte Kappenrand beim anschließenden Aufdrücken auf den Behälter mit dem Mündungsrand des Behälters kollidiert. Ein geringes Verkippen kann also zugelassen sein, das heißt die Verschlusskappe kann mit einem gewissen Spiel in der Ausnehmung aufgenommen sein.

Die Dimensionierung der Ausnehmung kann auch spielfrei ausgeführt werden und dadurch die Verschlusskappe klemmend in der Ausnehmung aufgenommen sein. Dabei sollte bei der Dimensionierung beachtet werden, dass die Klemmkraft einerseits ausreichend groß ist, um ein sicheres Halten der Verschlusskappe zu gewährleisten. Die Klemmkraft sollte aber auch klein genug sein, um nach dem Aufdrücken der Verschlusskappe auf den Behälter den Form- und Füllkopf wieder abheben zu können, ohne dass die Verschlusskappe wieder vom Behälter abgezogen wird. Es sollten hierbei die Fertigungstoleranzen der Verschlusskappen berücksichtigt werden, die von den Kappenherstellern in den Kappenspezifikationen angegeben werden.

Die Dimensionierung der Ausnehmung ist bevorzugt auch so gewählt, dass die darin aufgenommene Verschlusskappe nur teilweise darin aufgenommen ist, also z.B. in axialer Richtung im wesentlichen nur der geschlossene Deckelbereich der Verschlusskappe bzw. der später nicht auf den Behälter aufgedrückte Bereich, z.B. der gewindefreie kappendeckelnahe Bereich, während z.B. der mit einem Innengewinde versehene Kappenbereich nicht in der Ausnehmung aufgenommen wird. Durch diese Maßnahme kann erreicht werden, dass die Verschlusskappe zu einer radialen Aufweitung fähig ist während des Aufdrückens auf den Behälter. Z.B. kann die Verschlusskappe nur zu höchstens 40 %, bevorzugt zu höchstens 25 %, in ihrer axialen Ausdehnung in der Ausnehmung aufgenommen sein. Der auf den Behälter aufgedrückte Kappenbereich, z.B. der Gewindebereich der Verschlusskappe, bleibt dadurch außerhalb der Ausnehmung und kann sich beim Aufdrücken auf den Behälter nach außen aufweiten. Es kann auch vorgesehen sein, dass die Verschlusskappen nur teilweise in radialer Richtung von der Ausnehmung umgriffen werden.

Die Zuführung der Verschlusskappen kann grundsätzlich unter Verwendung beliebiger Handhabungsmittel erfolgen, die auch bei der Behälter- oder Vorformlingshandhabung bekannt sind, z.B. Zangen. Bevorzugt erfolgt die Zuführung der Verschlusskappen aber mittels einer positionierbaren Zuführschiene, auf der die Verschlusskappen rutschend der Form- und Füllstation zugeführt werden. Positionierbar bedeutet in diesem Fall, dass die Schiene während der Form- und Füllvorganges in einer Ruhepositionierung angeordnet ist. Für die Zuführung einer Verschlusskappe zu einer Form- und Füllstation wird die Schiene dann so angeordnet, dass eine Verschlusskappe in den Bereich zwischen der Behältermündung und dem Form- und Füllkopf entlang der Schiene geführt werden kann. Hierzu ist bevorzugt ein Ladefinger vorgesehen, der die Verschlusskappe auf der Zuführschiene hin zu der gewünschten Position bewegt. Bei entsprechender Ausformung des Endbereiches des Ladefingers kann dieser die Verschlusskappe zusätzlich in radialer Kappenrichtung umfassen und dadurch gegen verrutschen sichern. Auch die Zuführschiene kann über Leitmittel verfügen, um die Verschlusskappe gegen seitliches Verrutschen zu sichern.

Die Verschlusskappe ist im Rahmen der Erfindung eine Schraubverschlusskappe. Hierdurch wird ein Wiederverschließen des Behälters nach erstmaligem Öffnen ermöglicht. Unter einer Schraubverschlusskappe wird im Rahmen der Erfindung insbesondere eine Kappe verstanden, die durch Drehen oder Schrauben gelöst und geöffnet wird.

Wie eingangs ausgeführt kann die Verschlusskappe erfindungsgemäß bis in eine endgültige Schließpositionierung auf den Behälter gedrückt werden. Dies stellt unter Umständen jedoch eine hohe Belastung der Gewinde am Behälter und in der Verschlusskappe dar. Es ist dabei auch zu beachten, dass die Kappe im Bereich ihres offenen Endes leichter aufweitbar ist als im näher am geschlossenen Ende liegenden Kappenbereich. Es kann also vorteilhaft sein, die Verschlusskappe nur teilweise auf den Behälter zu drücken. In diesem Zusammenhang besteht erfindungsgemäß die Möglichkeit, die Verschlusskappe zunächst eine erste Wegstrecke auf den Behälter zu drücken, und dann die Kappe weiter aufzuschrauben. Dieses Aufschrauben kann auch außerhalb der Form- und Füllstation erfolgen. Um dies aber noch in der Form- und Füllstation auszuführen erweist es sich als vorteilhaft, den Form- und Füllkopf in einen drehbaren Kopfabschnitt, der z.B. die Ausnehmung für die Verschlusskappe aufweist, und in einen drehfesten Kopfabschnitt zu unterteilen. Der drehbare Kopfabschnitt ist drehbar am drehfesten Kopfabschnitt angeordnet. Zum Drehen des drehbaren Kopfabschnittes gegenüber dem drehfesten Kopfabschnitt ist eine Antriebseinrichtung vorgesehen. Diese Antriebseinrichtung kann insbesondere als Zahnradantrieb ausgeführt sein, insbesondere als miteinander kämmende Zahnräder mit einem von einem Antriebsmittel angetriebenen Zahnrad, wobei der drehbare Kopfabschnitt ein fest damit verbundenes Zahnrad aufweist, das in kämmendem Eingriff mit einem von dem Antriebsmittel antreibbaren Zahnrad steht. Durch Drehen des drehbaren Kopfabschnittes kann die von diesem Abschnitt gehaltene Verschlusskappe nach dem ersten Aufdrücken der Kappe in gewindeschonender Weise auf den Behälter aufgeschraubt werden. Ein weiterer Vorteil der vorstehend erläuterten abschließenden Drehung der Verschlusskappe ist, dass dadurch eine gewünschte Stellung in Umfangsrichtung zwischen dem Behälter und der Verschlusskappe erreichbar ist bzw. zwischen den daran ausgebildeten Gewindepartnern. Dies ist für eine optimale Dichtwirkung aber vorteilhaft. Beim Aufpressen der Verschlusskappe auf den Behälter liegt hingegen zunächst irgendeine relative Stellung in Umfangsrichtung zueinander vor. Insofern hat das abschließende Ausführen der Drehbewegung den zusätzlichen Vorteil, dass die Dichtigkeit erhöht wird, da dabei eine Ausrichtung des Gewindes bzw. der Gewindepartner erfolgt.

Eine äußerst kompakte Konstruktion wird dadurch unterstützt, dass die Behälter bei den beschriebenen Verfahren und Vorrichtungen auf einem rotierenden Arbeitsrad geformt, gefüllt und verschlossen werden. Im Produktionsbetrieb läuft dieses Arbeitsrad kontinuierlich um.

Die vorstehend erläuterten erfindungsgemäßen Verfahren und Vorrichtungen lassen sich in gleicher Weise mit und ohne Verwendung einer Reckstange realisieren. Bevorzugt ist allerdings eine Reckstange vorgesehen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt derAnsprüche zu einem Bestandteil der Beschreibung gemacht.

Die Erfindung wird im Folgenden anhand der Figuren an Ausführungsbeispielen näher erläutert. Es zeigen:
- Figur 1: eine schematische Darstellung eines Grundaufbaus einer Form- und Füllmaschine zur Durchführung der hydraulischen Behälterformung unter Verwendung eines Füllgutes gemäß dem Stand der Technik,
- Figur 2: einen schematischen Längsschnitt durch einen Vorformling mit teilweise eingeführter Reckstange sowie einer Entlüftungseinrichtung gemäß dem Stand der Technik,
- Figur 3: einen schematischen Längsschnitt durch einen geformten Behälter mit teilweise eingeführter Reckstange gemäß dem Stand der Technik,
- Figur 4: eine schematische Darstellung einer kombinierten Form-, Füll- und Verschließstation gemäß dem Stand der Technik
- Figur 5: eine andere Ausführungsform der kombinierten Form-, Füll- und Verschließstation gemäß dem Stand der Technik,
- Figur 6: eine schematische Detailansicht im Schnitt durch eine Form- und Füllstation mit einem Form- und Füllkopf mit einem ersten Ausführungsbeispiel einer Verschließeinrichtung und mit einem Vorformling in einer ersten Prozessphase eines erfindungsgemäßen Form- und Füll- sowie Verschließvorganges;
- Figur 7-11: weitere schematische Detailansichten im Schnitt analog zu der Darstellung in Figur 6 zu weiteren Prozessphasen eines erfindungsgemäßen Form- und Füll- sowie Verschließvorganges;
- Figur 12-16: Ausführungsvarianten zu vorteilhaft ausgebildeten Verschlusskappen und Mündungsabschnitten von Vorformlingen für die Ausführung erfindungsgemäßer Form- und Füll- sowie Verschließvorgänge;
- Figur 17: eine schematische Darstellung einer erfindungsgemäßen Form- und Füllmaschine zur Durchführung der hydraulischen Behälterformung unter Verwendung eines Füllgutes mit einem alternativen Ausführungsbeispiel einer Verschließeinrichtung.

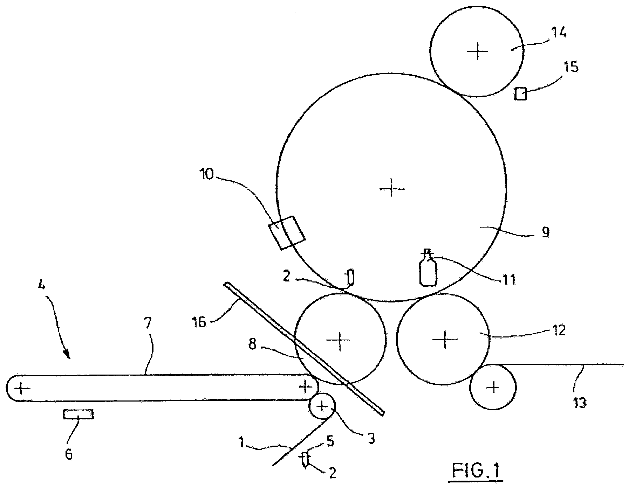

Der prinzipiell aus dem Stand der Technik bekannte Aufbau einer kombinierten Form- und Füllmaschine ist in Figur 1 dargestellt. Die Darstellung zeigt die bevorzugte Ausbildung einer solchen Maschine als eine rotierender Bauart mit einem rotierenden Arbeitsrad (9). Von einer Zuführeinrichtung (1) werden schematisch dargestellte Vorformlinge (2), die auch als Preforms bezeichnet werden, unter Verwendung eines Übergaberades (3) kontinuierlich einer Heizeinrichtung (4) zugeführt. Im Bereich der Heizeinrichtung (4), in der die Vorformlinge (2) entlang einer Heizstrecke transportiert und dabei thermisch konditioniert werden, können die Vorformlinge (2) anwendungsabhängig beispielsweise mit ihren Mündungsabschnitten (5) in lotrechter Richtung nach oben oder in lotrechter Richtung nach unten transportiert werden. Die Heizeinrichtung (4) ist beispielsweise mit Heizelementen (6) ausgestattet, die entlang einer Transporteinrichtung (7) zur Ausbildung der Heizstrecke angeordnet sind. Als Transporteinrichtung (7) kann beispielsweise eine umlaufende Kette mit Transportdornen zur Halterung der Vorformlinge verwendet werden. Als Heizelemente (6) eignen sich beispielsweise IR-Strahler oder Licht emittierende Dioden oder NIR-Strahler. Da solche Heizeinrichtungen in vielfältiger Art im Stand der Technik bekannt sind und die konstruktiven Einzelheiten der Heizeinrichtung für die vorliegende Erfindung nicht wesentlich sind, kann auf eine detailliertere Beschreibung verzichtet und auf den Stand der Technik verwiesen werden, insbesondere auf den Stand der Technik zu Heizeinrichtungen von Blas- und von Streckblasmaschinen..

Nach einer ausreichenden Temperierung (auch thermische Konditionierung genannt) werden die Vorformlinge (2) von einem Übergaberad (8) zu einem rotationsfähig angeordneten, d.h. um eine vertikale Maschinenachse umlaufend antreibbaren Arbeitsrad (9) bzw. an Form- und Füllstationen (10) übergeben, die an dem Arbeitsrad (9) umfangsverteilt vorgesehen sind. Das Arbeitsrad (9) ist mit einer Mehrzahl solcher Form-und Füllstationen (10) ausgestattet, in deren Bereich sowohl eine Umformung der Vorformlinge (2) in die schematisch dargestellten Behälter (11) als auch eine Befüllung der Behälter (11) mit dem vorgesehenen Füllgut erfolgt. Das Formen jedes Behälters (11) erfolgt hierbei zeitgleich mit der Befüllung, wobei das Füllgut als Druckmedium beim Formen dient.

Nach dem Formen und Füllen werden die Behälter (11) von einem Entnahmerad (12) vom Arbeitsrad (9) entnommen, weitertransportiert und einer Ausgabestrecke (13) zugeführt. Das Arbeitsrad (9) läuft im Produktionsbetrieb kontinuierlich mit einer gewünschten Umlaufgeschwindigkeit um. Während eines Umlaufs erfolgt das Einsetzen eines Vorformlings (2) in eine Form- und Füllstation (10), die Expansion des Vorformlings (2) zu einem Behälter (11) inklusive Füllung mit einem Füllgut und ggf. inkl. Reckung, falls eine Reckstange vorgesehen ist, und die Entnahme des Behälters (11) aus der Form- und Füllstation (10).

Gemäß der Ausführungsform in Figur 1 ist weiterhin vorgesehen, dem Arbeitsrad (9) über eine Eingabeeinrichtung (14) schematisch dargestellte Verschlusskappen (15) zuzuführen. Hierdurch ist es möglich, auf dem Arbeitsrad (9) auch bereits ein Verschließen der Behälter (11) durchzuführen und unter Verwendung der Entnahmeeinrichtung (12) fertig geformte, gefüllte und verschlossene Behälter (11) zu handhaben. Einzelheiten zu den Verschlusskappen (15) und zum Verschließen der Behälter (11) ergeben sich anhand der später erläuterten Beispiele.

Als Material für die Vorformlinge (1) können unterschiedliche thermoplastische Materialien verwendet werden. Beispielhaft seien Polyethylenterephthalat (PET), Polyethylen (PE), Polyethylennaphthalat (PEN) oder Polypropylen (PP) genannt. Die Dimensionierung sowie das Gewicht der Vorformlinge (2) können an die Größe, das Gewicht und/oder an die Gestaltung der herzustellenden Behälter (11) angepasst werden.

Im Bereich der Heizeinrichtung (4) sind typischerweise eine Vielzahl von elektrischen und elektronischen Bauteilen angeordnet. Darüber hinaus sind die Heizelemente (6) mit feuchtigkeitsempfindlichen Reflektoren versehen. Da im Bereich des Arbeitsrades (9) unter Verwendung des flüssigen Füllgutes eine Befüllung und Formung der Behälter (11) erfolgt, sollte zur Vermeidung elektrischer Probleme dafür gesorgt werden, dass ein unbeabsichtigter Eintrag von Feuchtigkeit in den Bereich der Heizeinrichtung (4) vermieden wird. Dies kann beispielsweise durch eine Abschotteinrichtung (16) erfolgen, die zumindest einen Spritzschutz bietet. Darüber hinaus ist es auch möglich, im Bereich des Übergaberades (8) verwendete Transportelemente für die Vorformlinge (2) geeignet zu temperieren oder mit Druckgasstößen derart zu beaufschlagen, dass anhaftende Feuchtigkeit nicht in den Bereich der Heizeinrichtung (4) gelangen kann.

Eine Handhabung der Vorformlinge (2) und/oder der Behälter (11) erfolgt vorzugsweise unter Verwendung von Zangen und/oder den Mündungsabschnitt (5) wenigstens bereichsweise von innen oder von außen beaufschlagenden Klemm- oder Steckdornen. Solche Handhabungsmittel sind ebenfalls aus dem Stand der Technik ausreichend bekannt.

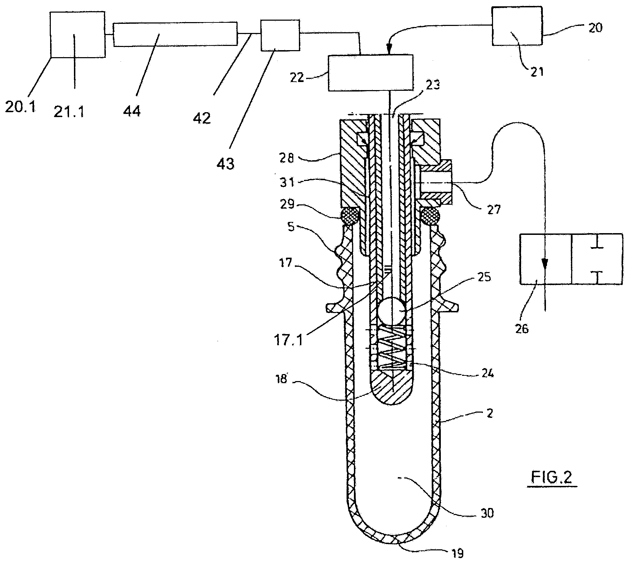

Figur 2 zeigt einen Längsschnitt durch einen Vorformling (2), in den eine Reckstange (17) eingeführt ist. Die Reckstange (17) dient der mindestens zeitweisen Führung des Vorformlings (1) während seiner Umformung zum Behälter (11). Typischerweise erfolgt ein Kontakt zwischen einer Kuppe (18) der Reckstange (17) und einem Boden (19) des Vorformlings (2). Bei einem weiteren Einfahren der Reckstange (17) in den Vorformling (2) hinein wird eine Längsreckung des Vorformlings (2) verursacht. Nach einem Abschluss des Reckvorganges oder zumindest zeitweilig auch bereits während der Durchführung des Reckvorganges wird einer Vorratseinrichtung (20) entnommenes Füllgut (21) unter einem Fülldruck in den Vorformling (2) eingeleitet.

Eine Dosierung des Füllgutes (21) erfolgt unter Verwendung eines Mehrwegedosierventils (22). Beim dargestellten Ausführungsbeispiel ist die Reckstange (17) mindestens bereichsweise hohl bzw. mit einem Kanal ausgebildet. Im Bereich einer Wandung eines kuppenseitigen Endbereiches der Reckstange (17) sind Ausströmöffnungen (24) angeordnet, die von einem Rückschlagventil (25) gegenüber dem Mehrwegedosierventil (22) absperrbar sind. Hierdurch kann ein unbeabsichtigtes Heraustropfen von Füllgut (21) aus der Reckstange (17) vermieden bzw. minimiert werden.

Eine Entlüftung des Vorformlings (2) kann unter Verwendung eines Entlüftungsventils (26) erfolgen. Das Entlüftungsventil (26) ist mit einer Ausströmöffnung (27) verbunden, die im Bereich eines den Vorformling (1) beaufschlagenden Form- und Füllkopfes (28) angeordnet ist. Durch den Form- und Füllkopf (28) hindurch ist die Reckstange (17) in axialer Richtung positionierbar. Der Vorformling (2) wird an seinem mündungsseitigen Ende gegenüber dem Form- und Füllkopf (28) von einer Dichtung (29) abgedichtet, die beispielsweise als ein O-Ring ausgebildet sein kann. Ein Innenraum (30) des Vorformlings (2) kann über einen Ringspalt (31) mit der Ausströmöffnung (27) verbunden sein. Der Ringspalt (31) umschließt hierbei bereichsweise die Reckstange (17). Der Form- und Füllkopf (28) kann gemäß seiner Funktion auch als Anschlusselement bezeichnet werden.

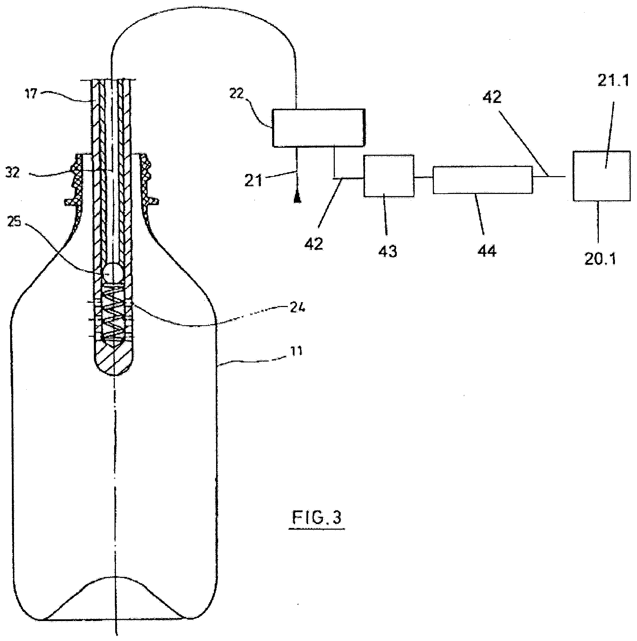

Figur 3 zeigt schematisch eine ähnliche Einrichtung wie in der Darstellung gemäß Figur 2 unter Verwendung einer hohlen Reckstange (17) mit einem eingebauten Rückschlagventil (25). Dargestellt ist allerdings ein bereits fertig geformter Behälter (11). Zu erkennen ist sowohl in Figur 2 als auch in Figur 3, dass vorzugsweise eine Mehrzahl von Ausströmöffnungen (24) im kuppenseitigen Endbereich der Reckstange (17) angeordnet wird. Beim dargestellten Ausführungsbeispiel sind derartige Ausströmöffnungen (24) auf unterschiedlichen Höhenniveaus entlang einer Längsachse (32) der Reckstange (17) positioniert. Ebenfalls zeigt das dargestellte Ausführungsbeispiel eine Ausrichtung der Ausströmöffnungen (24) mit einer im Wesentlichen horizontalen Ausströmrichtung. Sowohl die Anordnung der Ausströmöffnungen (24) im kuppenseitigen Endbereich der Reckstange (17) als auch die Ausrichtung der Ausströmöffnungen (24) ist aber variierbar. Angestrebt wird typischerweise ein möglichst ruhiges und spritzarmes Ausströmverhalten.

Gemäß einer alternativen, nicht dargestellten Ausführungsform kann auch eine massive Reckstange (17) verwendet werden. Eine Zuführung des Füllgutes (21) erfolgt dann entlang mindestens eines Strömungskanals an der Reckstange (17) vorbei. Vorzugsweise wird hierzu der Ringspalt (31) verwendet. Auch bei dieser Ausführungsform ist es möglich, ein gezieltes Entlüften durchzuführen.

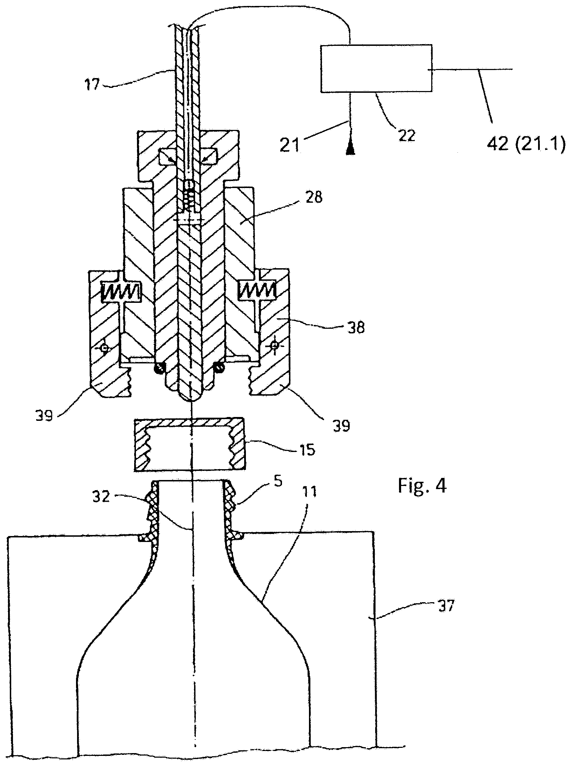

Figur 4 zeigt eine Ausführungsform, bei der im Bereich des Arbeitsrades (9) gemäß Figur 1 auch ein Verschließen der Behälter (11) erfolgt. Der Behälter (11) ist hierbei noch im Bereich einer Form (37) angeordnet, die einen Teil der Form- und Füllstation (10) gemäß Figur 1 ausbildet. Eine Verschließeinrichtung (38) ist bei dieser Ausführungsform gemäß dem Stand der Technik bezüglich der Längsachse (32) koaxial zum Form- und Füllkopf (28) angeordnet. Die Verschließeinrichtung (38) besitzt beispielsweise verschwenkbar angeordnete Greifer (39), die zur Beaufschlagung der Verschlusskappe (15) vorgesehen sind. Insbesondere ist daran gedacht, die Verschließeinrichtung (38) drehbeweglich relativ zum Form- und Füllkopf (28) anzuordnen. Hierdurch kann die Verschlusskappe (15) mit einem Innengewinde auf ein Außengewinde des Mündungsabschnittes (5) aufgeschraubt werden.

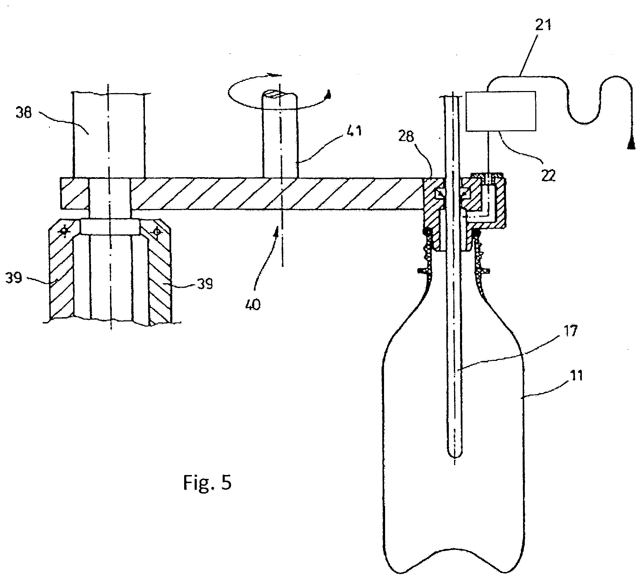

Figur 5 zeigt eine aus dem Stand der Technik bekannte alternative Ausführungsform zur Konstruktion gemäß Figur 4. Die Verschließeinrichtung (38) und der Form- und Füllkopf (28) sind hier nicht koaxial relativ zueinander angeordnet, sondern werden von einem Werkzeugträger (40) abwechselnd in einer Arbeitsanordnung bzw. einer Ruheanordnung positioniert. Der Werkzeugträger (40) kann beispielsweise revolverartig ausgebildet und mit einer Drehachse (41) versehen sein.

Bei den bekannten Ausführungsformen der Figuren 4 und 5 sind im Form- und Füllkopf (28) jeweils zusätzlich zu dem Kanal oder Innenraum (23) der Reckstange (17) ein in diesen Figuren nicht dargestellter Flüssigkeitskanal sowie bevorzugt auch ein Rückgaskanal vorgesehen. Nachfolgend werden einige prozesstypische Parameter beispielhaft näher erläutert. Das Füllgut (21) wird dem Form- und Füllkopf (28) vorzugsweise mit einer Temperatur des umgebenden Raumes, beispielsweise im Bereich von 20°C bis 30°C, zugeführt. Das Füllgut (21) kühlt hierdurch das Wandmaterial des Behälters (11) und unterstützt das schnellere Erreichen einer Formstabilität des geformten Behälters (11). Hierdurch wird eine sehr kurze Zykluszeit unterstützt. Ebenfalls ist es aber möglich, das Füllgut (21) stärker gekühlt oder erwärmt zuzuführen.

Während der Formung des Behälters (11) kann das Füllgut (21) zumindest zeitweilig mit einem konstanten Volumenstrom in den Vorformling (2) bzw. den Behälter (11) eingeleitet werden. Es ist aber auch möglich, für den Volumenstrom ein geeignetes zeitliches Profil derart vorzugeben, dass zu unterschiedlichen Zeitpunkten unterschiedlich große Volumenströme generiert werden.

Vor einer Einleitung des Füllgutes (21) ist es möglich, innerhalb des Vorformlings (1) befindliche Luft abzusaugen und/oder durch ein Inertgas zu ersetzen. Dies empfiehlt sich insbesondere bei oxidationsempfindlichen Füllmedien (21).

Als Füllgut (21) können entweder reine Flüssigkeiten oder mit Zusätzen versehene Flüssigkeiten verwendet werden. Insbesondere ist an eine Zuführung von karbonisierten Füllmedien gedacht. Da das Füllgut (21) dem Vorformling (2) bzw. dem Behälter (11) unter Druck zugeführt wird, beispielsweise mit einem Druck von 10 bar, erweist es sich als zweckmäßig, sämtliche Strömungswege für das Füllgut (21) derart zu gestalten, dass lokale Dekompressionen durch die Strömungsvorgänge vermieden werden. Eine lokale oder zeitweilige Dekompression könnte ansonsten zu einem unerwünschten Ausgasen von Kohlendioxid führen.

Alternativ zu der in Figur 1 dargestellten Beheizung von vorzugsweise spritzgegossenen Vorformlingen (2) ist es auch möglich, die Vorformlinge (2) erst unmittelbar vor ihrer Umformung in die Behälter (11) herzustellen. Dies kann beispielsweise durch einen Spritzgussvorgang wie bei einem sogenannten einstufigen Spritz-Blas-Verfahren erfolgen. Ebenfalls ist eine Kompressionsformung möglich. Eine derartige Formung der Vorformlinge (2) vermeidet die Verwendung von elektrischen und elektronischen Bauteilen im Bereich einer Heizeinrichtung oder reduziert zumindest wesentlich den Umfang einer Verwendung derartiger Teile, da diese dann nur noch für eine eventuell erforderliche Temperaturprofilierung benötigt werden.

Als Materialien für die Bauteile des Arbeitsrades (9) werden vorzugsweise korrosionsfeste Stoffe verwendet. Gedacht ist insbesondere an die Verwendung von nichtrostenden Stählen sowie Kunststoffen. Insbesondere ist daran gedacht, die Formen (37) ganz oder teilweise aus einem geeigneten Kunststoff auszubilden.

Zur Minimierung der erforderlichen Reckkräfte ist daran gedacht, den Reckvorgang durch eine Zufuhr des Füllgutes (21) zu unterstützen. Bei einer derartigen Unterstützung ist allerdings bevorzugt dafür zu sorgen, dass die Führung des Vorformlings (2) durch die Reckstange (17) sichergestellt ist. Dies kann beispielsweise dadurch erfolgen, dass die einwirkende Reckkraft gemessen wird und eine Steuerung des Volumenstromes des Füllgutes (21) derart erfolgt, dass immer eine Mindestreckkraft aufrechterhalten bleibt. Die Größe der Reckkraft lässt sich insbesondere sehr einfach bei elektrisch angetriebenen Recksystemen durch die Messung des Antriebsstromes oder bei pneumatischen Recksystemen durch eine Druckmessung ermitteln.

Bei der Abfüllung von Behältern (11) mit dem Füllgut (21) ist es häufig erwünscht, nach einem Verschließen des Behälters (11) einen gasgefüllten Kopfraum bereitzustellen. Dieser freie Kopfraum kann durch die Volumenverminderung generiert werden, die aus dem Zurückziehen der Reckstange (17) resultiert.

Die oben bereits erläuterte Materialauswahl erfolgt insbesondere auch unter Berücksichtigung von gegebenen Hygieneanforderungen. Es wird hierbei eine Entkeimbarkeit bzw. Sterilisierbarkeit gewährleistet. Ebenfalls erfolgt ein konstruktiver Aufbau derart, dass die Anforderungen an eine gute Reinigbarkeit erfüllt sind.

Eines oder mehrere der Übergaberäder können mit Servoantrieben ausgestattet sein. Hierdurch wird insbesondere unterstützt, eine vollständige Trennung der Heizeinrichtung (4) vom Arbeitsrad (9) während der Durchführung von Reinigungsvorgängen zu realisieren. Ebenfalls ist daran gedacht, im Bereich mindestens eines der Übergaberäder zurückziehbare Handhabungselemente anzuordnen. Ein weiterer Feuchtigkeitsschutz kann durch die Verwendung eines Trockenlufttunnels erfolgen.

Nachfolgend wird beispielhaft ein konkreter, aus dem Stand der Technik bekannter Prozessablauf beschrieben.

Vor oder nach dem Einsetzen des Vorformlings (2) in die Form (37) erfolgt bevorzugt zunächst ein Gasaustausch im Innenraum des Vorformlings, um insbesondere Sauerstoff zu verdrängen oder den Anteil von Sauerstoff zu vermindern. Ein Vorgang des Spülens und/oder Evakuierens dauert typischerweise höchstens 0,1 Sekunde. Das Recken des Vorformlings (2) unter Verwendung der Reckstange (17) dauert typischerweise etwa 0,2 Sekunden. Ebenfalls ist für das Füllen und die hieraus resultierende Umformung des Vorformlings (2) in den Behälter (11) ein Zeitraum von etwa 0,2 Sekunden vorgesehen. Für das anschließende Schaffen eines Kopfraumes wird typischerweise maximal ein Zeitraum von 0,2 Sekunden benötigt. Der Vorgang des Beruhigens und Entlastens des abgefüllten Behälters erfolgt bei stillen Getränken äußerst schnell, bei kohlensäurehaltigen Getränken kann dieser Vorgang einen Zeitraum von bis zu 5 Sekunden in Anspruch nehmen.

Eine Behandlung des Kopfraumes kann anschließend beispielsweise unter Verwendung einer Hochdruckaufschäumung oder einer Zudosierung von Stickstoff erfolgen. Das anschließende Zuführen einer Verschlusskappe kann bei karbonisierten Getränken einen Zeitraum bis zu 1,5 Sekunden in Anspruch nehmen. Ebenfalls nimmt der Vorgang des Verschließens bzw. Aufschraubens beispielsweise einen Zeitraum von 1,5 Sekunden in Anspruch.

Nach dem fertigen Verschließen des Behälters (1) öffnet die Form (37) und der abgefüllte Behälter (11) wird entnommen und abtransportiert.

Während der Einleitung des Füllgutes in den umzuformenden Vorformling (2) bzw. in den noch in der Formung befindlichen Behälter (11) ergibt sich in der Regel ein typischer Druckverlauf im Füllsystem bzw. im Vorformling (2) bzw. im noch in der Formung befindlichen Behälter (11). Aufgrund der Aufweitung des Behälters (11) liegt zunächst ein vergleichsweise geringer Druck vor, der zum Ende des Formungsvorgangs ansteigt. Der entsprechende Druckanstieg bzw. die Höhe des Druckanstieges im Füllsystem, insbesondere in der Füllleitung, kann als Steuergröße für einen folgenden Prozessschritt verwendet werden und gegebenenfalls den Zeitpunkt der Einleitung dieses nächsten Prozessschrittes bestimmen. Alternativ oder ergänzend ist auch daran gedacht, als Steuergrößen die Charakteristik des Druckverlaufes und/oder des Volumenstromes des Füllgutes zu verwenden.

Hinsichtlich der Temperatur des Füllgutes ist insbesondere daran gedacht, das Füllgut mit einer Umgebungstemperatur zuzuführen. In Abhängigkeit von den jeweiligen Anwendungsrandbedingungen ist aber auch eine gezielte Temperaturerhöhung oder eine gezielte Temperaturerniedrigung des zugeführten Füllgutes denkbar.

Gemäß einer weiteren Variante ist daran gedacht, den Füllvorgang zweistufig durchzuführen, wobei während der ersten Prozessstufe das Füllgut mit einer Temperatur zugeführt wird, die größer ist als die Temperatur während des zweiten Prozessschrittes. Der erste Prozessschritt kann beispielsweise durchgeführt werden, wenn über die Reckstange (11) die Längsreckung des Vorformlings (2) durchgeführt wird. Der zweite Prozessschritt schließt sich dann an die Durchführung des Reckvorganges an und entspricht der Radialaufweitung des Behälters (11).

Bei der vorstehend bereits kurz erwähnten Beruhigung im Kopfraum nach der Druckentlastung ist auch daran gedacht, gegebenenfalls eine Absaugung von sich bildenden Gasen und/oder Schaum durchzuführen.

Vorstehend wurde davon ausgegangen, dass der jeweilige Vorformling (2) während des Formens und Füllens mit seiner offenen Seite nach oben weisend in Dichtlage gegen die Dichtung (29) anliegt. Es sind aber auch Ausführungen der Form- und Füllstation (10) möglich, bei denen der jeweilige Vorformling (2) während des Formens und Füllens mit seiner offenen Seite nach unten weisend in Dichtlage gegen die Dichtung (29) oder eine entsprechende Dichtung des Form- und Füllkopfes (28) anliegt.

Die vorstehende Beschreibung diente der Einbettung der Erfindung in einen technischen Gesamtkontext und der Beschreibung grundsätzlich bekannter Vorrichtungen und Verfahren zur Formung von Behältern unter Verwendung des Füllgutes als Druckmedium. Insofern sind die vorstehend zu den Figuren 1 bis 5 beschriebenen technischen Merkmale als bevorzugte Merkmale zu verstehen, die aber die beanspruchte Erfindung nicht beschränken sollen. Nachfolgend werden erfindungsgemäße Weiterbildungen zu diesem Stand der Technik anhand von Ausführungsbeispielen beschrieben.

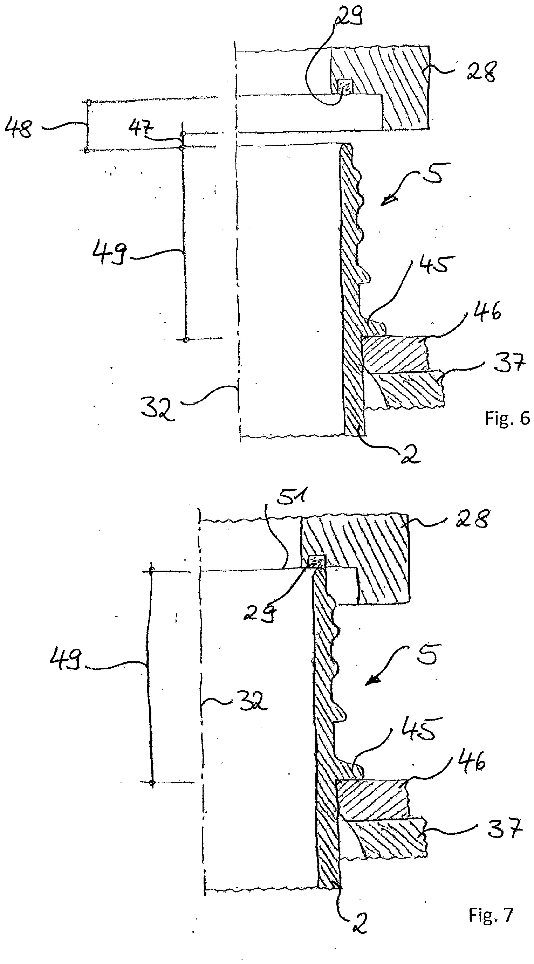

Fig. 6 zeigt in einer Detailansicht im Schnitt einen Ausschnitt einer Form- und Füllstation (10) mit einem Form- und Füllkopf (28). Im dargestellten Stadium befindet sich der Vorformling (2) bereits in der geschlossenen Form (37). Der sogenannte Neckring (45) des Vorformlinges (2) liegt auf der Anschlagplatte (46) der Form (37) an. Diese Anschlagplatte (46) ist zum Beispiel lösbar mit der Form (37) verschraubt, um bei Änderung der Art des Vorformlinges (2) für das Formen anderer Behälter eine leichte Anpassbarkeit bereitzustellen. Bei einem solchen Vorformlingswechsel ist dann lediglich bei jeder Form- und Füllstation (10) die Anschlagplatte (46) gegen eine an den geänderten Vorformlingstyp angepasste Anschlagplatte auszutauschen.

In der gezeigten Prozessphase befindet sich der Form- und Füllkopf (28) in einer Ruhepositionierung. Zwischen dem Form- und Füllkopf (28) und dem oberen Mündungsrand (51) des Mündungsabschnittes (5) des Vorformlinges (2) verbleibt ein Eingabespalt (47), der ein Öffnen und Schließen der Form (37) und ein Einsetzen eines Vorformlinges (2) in die geöffnete Form (37) ermöglicht. Der Höhenabstand zwischen der Dichtung (29) und der Oberkante (51) des Mündungsabschnittes (5) des Vorformlinges (2) definiert eine Wegstrecke, die als Dichtungshubweg (48) bezeichnet werden kann. Um diese Wegstrecke muss der Form- und Füllkopf (28) auf den Vorformling (2) abgesenkt werden, um eine Abdichtung zum Zwecke der Einfüllung des Füllgutes unter Druck zu erreichen.

Die in Fig. 6 gezeigte Anordnung eines Dichtringes (29) am Form- und Füllkopf (28) wird als bevorzugt angesehen. Es ist auch eine Anordnung denkbar, die eine Abdichtung gegenüber dem Vorformling (2) an einem anderen Vorformlingsabschnitt vorsieht oder eine Abdichtung gegenüber der Anschlagplatte (46). Eine solche alternative Anordnung wird deshalb als weniger vorteilhaft angesehen, weil dadurch ein größerer Dichtungshubweg (48) bedingt wäre und der Form- und Füllkopf (28) eine größere Wegstrecke zwischen seiner Dichtpositionierung und seiner in Fig. 6 dargestellten Ruhepositionierung zurücklegen müsste.

In der in Fig. 7 dargestellten Prozessphase wurde der Form- und Füllkopf (28) von der Ruhepositionierung der Fig. 6 in seine Dichtpositionierung bewegt. Der Dichtring (29) liegt dichtend auf dem Mündungsrand (51) des Vorformlinges (2) auf. In diesem Dichtzustand kann nunmehr Füllgut unter Druck in den Vorformling (2) hineinströmen und der Ausformungsvorgang durchgeführt werden. In nicht dargestellter Weise kann eine Reckstange (17) durch den Form- und Füllkopf (28) in Achsrichtung verschoben werden, wenn der Formvorgang durch eine Reckstange (17) unterstützt werden soll. Auf die Erläuterungen zu den Figuren 2 - 5 bezüglich der Reckstange (17) kann hier verwiesen werden.

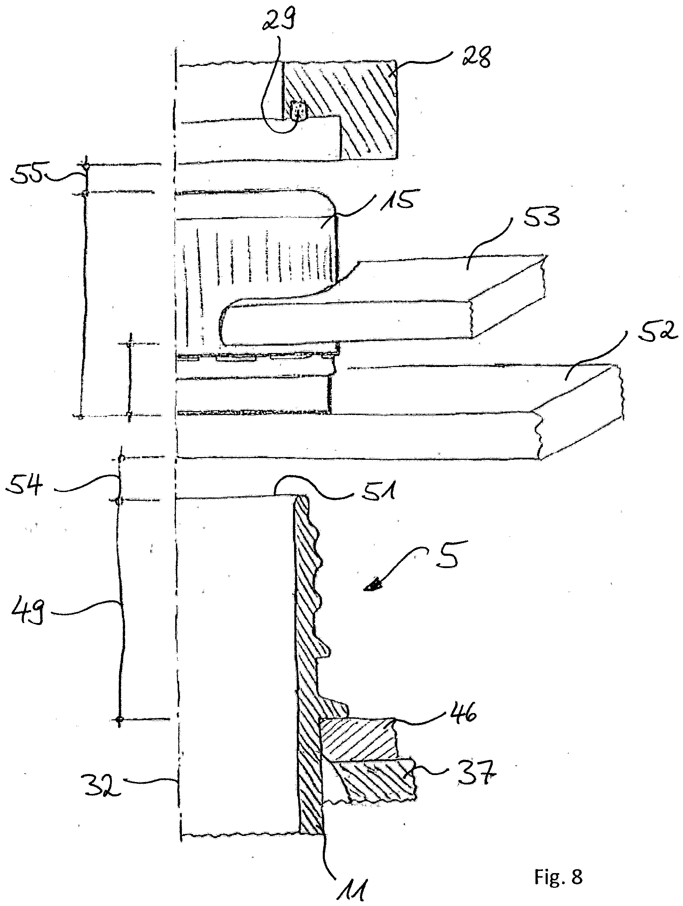

In der in Fig. 8 dargestellten Prozessphase ist der Form- und Füllvorgang abgeschlossen, d.h. aus dem Vorformling (2) ist nunmehr ein Behälter (11) geworden und der Form- und Füllkopf (28) wurde aus der Dichtungspositionierung entfernt durch Bewegen in eine Positionierung, die ein Zuführen einer Verschlusskappe (15) ermöglicht. Im dargestellten Ausführungsbeispiel ist diese Kappenzuführpositionierung des Form- und Füllkopfes (28) so gewählt, dass eine als Zuführschiene (52) ausgebildete Kappenzuführungseinrichtung (50) zwischen die Behältermündung (51) und den Form- und Füllkopf (28) hineinbewegt werden kann. Weiterhin ist die Positionierung so gewählt, dass eine Verschlusskappe (15) zwischen der Behältermündung (51) und dem Form- und Füllkopf (28) hineingeführt werden kann. Im dargestellten Ausführungsbeispiel erfolgt das Zuführen der Kappe (15) auf der dargestellten Führungsschiene (52), auf der eine Verschlusskappe (15) mittels eines Ladefingers (53) in eine Sollpositionierung oberhalb der Behältermündung (51) angeordnet wird. Zwischen der Führungsschiene (52) und dem Mündungsabschnitt (5) des Behälters (11) verbleibt ein Ladespalt (54) und auch zwischen der Oberseite der Verschlusskappe (15) und dem Form- und Füllkopf (28) verbleibt ein Eingabespalt (55), sodass die Verschlusskappe in seine Sollposition verschoben werden kann, ohne mit dem Form- und Füllkopf (28) zu kollidieren. Zur Vermeidung großer Wegstrecken sind die genannten Spalte (54, 55) so dimensioniert, dass einerseits keine Kollisionen beim Bewegen der Kappe (15) und beim Bewegen der Führungsschiene (52) zu besorgen sind, andererseits aber möglichst geringe Hubwege zu überbrücken sind.

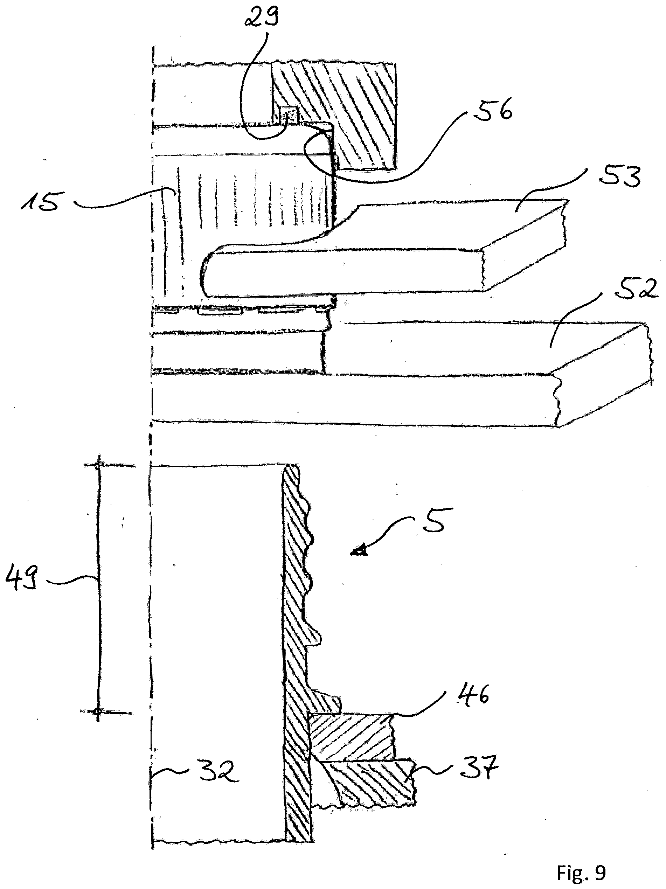

Nach einem Abschluss der in Fig. 8 dargestellten Zuführung einer Verschlusskappe (15) wird wie in Fig. 9 dargestellt der Form- und Füllkopf (28) abgesenkt. Kappenseitig weist der Form- und Füllkopf (28) eine Ausnehmung (56) auf, die in ihrer Dimensionierung der Verschlusskappe (15) so angepasst ist, dass die Verschlusskappe (15) beim Absenken des Form- und Füllkopfes (28) in dieser Ausnehmung (56) gegen ein Verkippen gesichert aufgenommen wird. In der dargestellten Ausführungsform ist die Verschlusskappe (15) spielfrei und klemmend gehalten. Ein bestimmtes Maß an Spiel und dadurch ein gewisses Maß an Verkippen kann aber auch vorgesehen sein. Die Dichtung (29) ist im Bereich der Ausnehmung (56) angeordnet. Während dieses Absenkens des Form- und Füllkopfes (28) zur beispielsweise klemmenden Aufnahme der Verschlusskappe (15) verbleiben die Führungsschiene (52) und bevorzugt auch der Ladefinger (53) in ihrer Zuführpositionierung der Fig. 8, um die Verschlusskappe (15) nach unten abzustützen, damit die Kappe (15) in die Ausnehmung (56) hineingedrückt werden kann. Erst danach werden die Führungsschiene (52) und gegebenenfalls der Ladefinger (53) verfahren. Die Verschlusskappe (15) wird nunmehr vom Form- und Füllkopf (28) gehalten. Es ist aber auch möglich, dass das Absenken des Form- und Füllkopfes (28) und das Verfahren der Führungsschiene (52) und/oder des Ladefingers (53) simultan erfolgen.

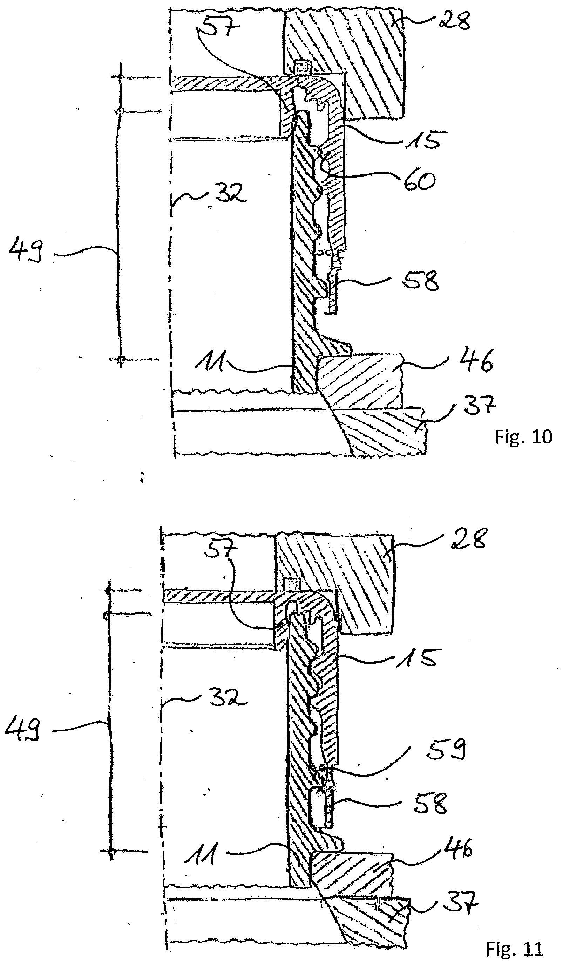

Bei der in Fig. 10 dargestellten Prozessphase wurde der Form- und Füllkopf (28) zusammen mit der davon gehaltenen Verschlusskappe (15) in Richtung auf den gefüllten Behälter (11) abgesenkt. Der Form- und Füllkopf (28) drückt die Verschlusskappe (15) über eine bestimmte Wegstrecke der Mündungshöhe (49) über den Mündungsbereich (5) des Behälters (11), bis eine gewünschte Verschließpositionierung erreicht ist. Fig. 11 zeigt diese gewünschte Verschlusspositionierung des Form- und Füllkopfes (28), bei der ein innenseitig der Verschlusskappe (15) ausgebildeter Dichtring (57) in Anlage zu einem Mündungsbereich (5) des Behälters (11) gelangt. Die Verschließpositionierung des Form-und Füllkopfes (28) kann auch so gewählt werden, dass die Verschlusskappe (15) zunächst nur so weit auf den Mündungsbereich (5) des Behälters (11) aufgeschoben wird, dass eine vorläufige Dichtheit gegenüber Flüssigkeitsaustritt gegeben ist, und erst zu einem späteren Zeitpunkt, zum Beispiel außerhalb der Form- und Füllstation (10), kann eine weitere Verschließeinheit die Verschlusskappe (15) endgültig auf den gefüllten Behälter (11) aufbringen, zum Beispiel in seine endgültige Verschließstellung schrauben. Im in Fig. 11 dargestellten Ausführungsbeispiel ist hingegen die Verschließpositionierung des Form- und Füllkopfes (28) so gewählt, dass die Verschlusskappe (15) ihre endgültige Verschließstellung erreicht hat, d.h. ein zum Beispiel an der Verschlusskappe (15) ausgebildeter Garantiering (58) ist am Sicherungsring (59) des Behälters (11) eingerastet und auch das innenseitig in der Verschlusskappe ausgebildete Gewinde (60) befindet sich im gewünschten Eingriff mit dem außenseitig am Mündungsbereich (5) des Behälters (11) ausgebildeten Behältergewindes (61). Ein nachfolgendes weiteres Eingreifen einer Verschließeinrichtung außerhalb der Form- und Füllstation (10) wäre in diesem Fall nicht notwendig, da die Kappe (15) durch das Herabdrücken durch den Form- und Füllkopf (28) bereits ihre endgültige Dichtposition erreicht.

Nach Abschluss des Aufdrückens der Verschlusskappe (15) auf den Behälter (11) kann der Form- und Füllkopf (28) wieder in eine Entnahmepositionierung verfahren werden, die ein Entnehmen des fertig ausgeformten, gefüllten und mit einer Verschlusskappe (15) versehenen Behälters (11) erlaubt. Diese Entnahmepositionierung des Form- und Füllkopfes (28) kann der Ruhepositionierung in Fig. 6 entsprechen, wenn diese Positionierung ausreichend berücksichtigt, dass nunmehr nicht mehr ein unverschlossener Behälter (11) zu entnehmen ist, sondern ein mit einer Verschlusskappe (15) versehener Behälter (11).

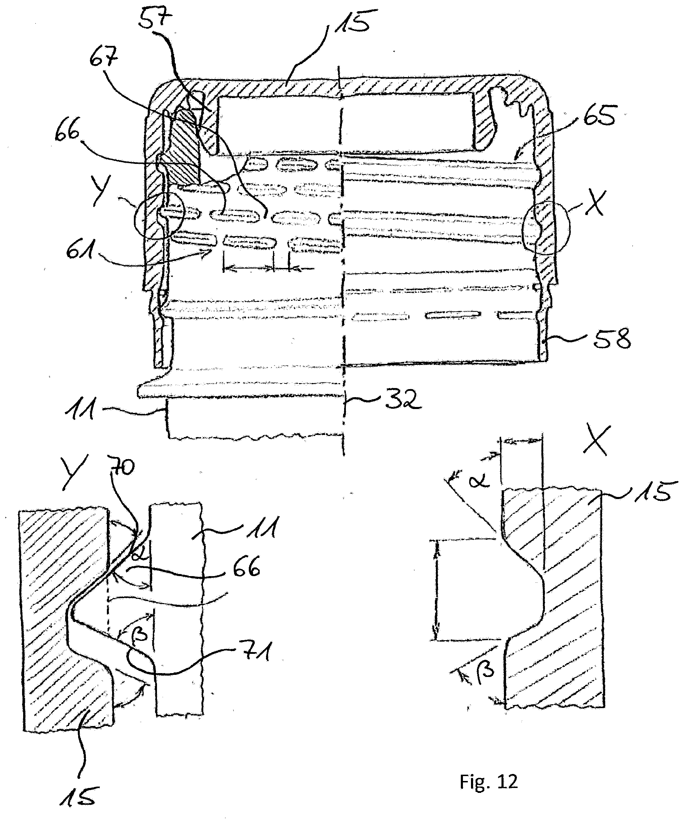

Die Figuren 12 - 16 zeigen Verschlusskappen (15) und zeigen Mündungsbereiche (5) von Behältern (11) bzw. Vorformlingen (2), die das vorstehend beschriebene Aufdrücken einer Verschlusskappe (15) auf einen Behälter (11) in vorteilhafter Weise unterstützen. So zeigt zum Beispiel die Fig. 12 eine für das Aufschieben der Verschlusskappe (15) auf den Mündungsbereich (5) eines Behälters (11) vorteilhafte Drehverschlusskappe (15), die innenseitig Gewindefurchen (65) aufweist. Diese Gewindefurchen (65) arbeiten zusammen mit einem Außengewinde (61) am Behälter (11), wobei dieses Außengewinde (61) aus Gewindelamellen (66) besteht, also aus Gewindesegmenten, zwischen denen Unterbrechungen (67) ausgebildet sind. Aufgrund dieser Ausbildung des Gewindes (61) in Form von Gewindesegmenten mit dazwischenliegenden Unterbrechungen ist das Aufdrücken der Verschlusskappe (15) durch den Form- und Füllkopf (28) auf den Behälter (11) erleichtert. Dieses Aufdrücken wird noch dadurch zusätzlich erleichtert, dass die mündungsöffnungsseitige Flanke (70) eines Gewindesegments (66) einen anderen Neigungswinkel gegenüber der Behälterlängsachse (32) aufweist, als die behälterbodenseitige Flanke (71) der Gewindelamelle (66). Insbesondere ist mit Vorteil der Neigungswinkel (β) der bodenseitigen Flanke (71) größer als der Neigungswinkel (α) der behälteröffnungsseitigen Flanke (70). In analoger Weise sind die dazu komplementären Flanken der Gewindefurche (65) auf der Innenseite der Verschlusskappe (15) in ihrem Neigungswinkel ausgeführt.

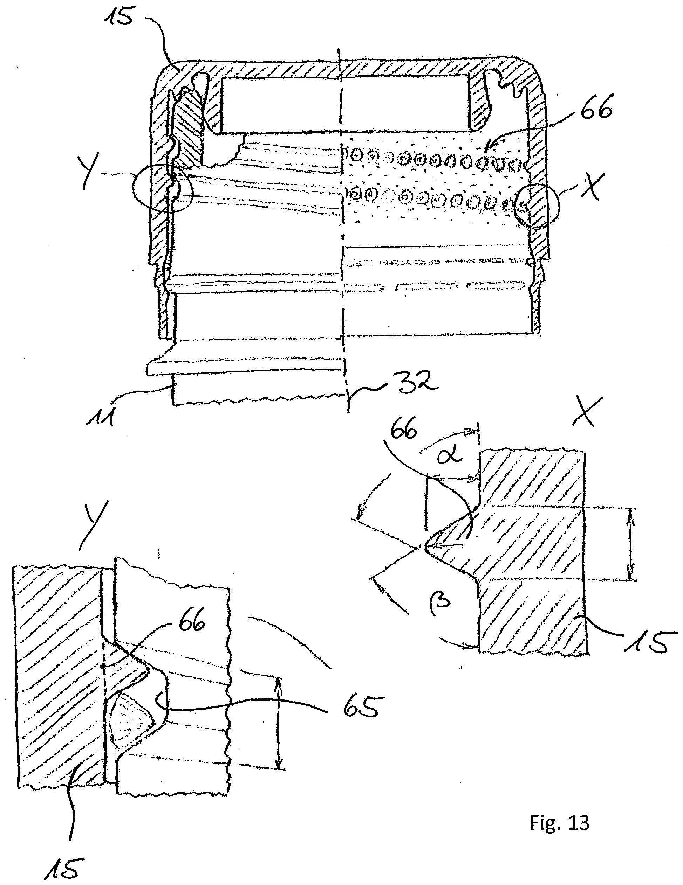

Fig. 13 zeigt in gewisser Weise eine Umkehrung des in Fig. 12 dargestellten Prinzips. Die Gewindefurche (65) ist nunmehr außenseitig am Behälter (11) ausgeführt, während innenseitig in der Verschlusskappe (15) Gewindesegmente (66) mit dazwischenliegenden Unterbrechungen (67) ausgeführt sind. Diese Gewindesegmente (66) haben im Ausführungsbeispiel der Fig. 13 eine noppenartige Gestalt, die auch im Ausführungsbeispiel der Fig. 12 realisiert sein könnte.

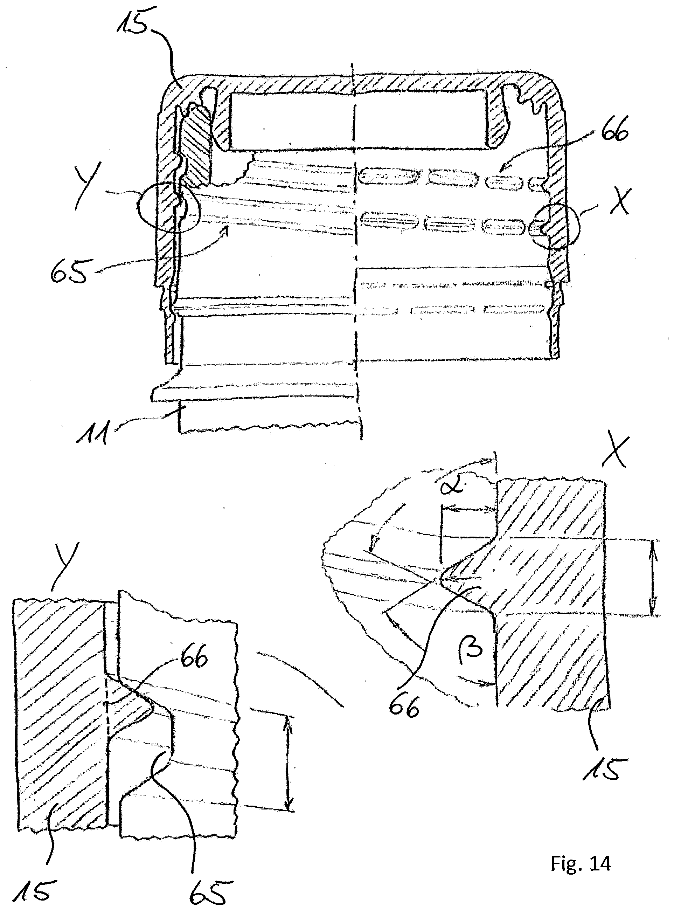

Das Ausführungsbeispiel der Fig. 14 entspricht im Wesentlichen dem Ausführungsbeispiel der Fig. 13, wobei die noppenartigen Gewindesegmente (66) auf der Kappeninnenseite durch Gewindelamellen ersetzt sind.

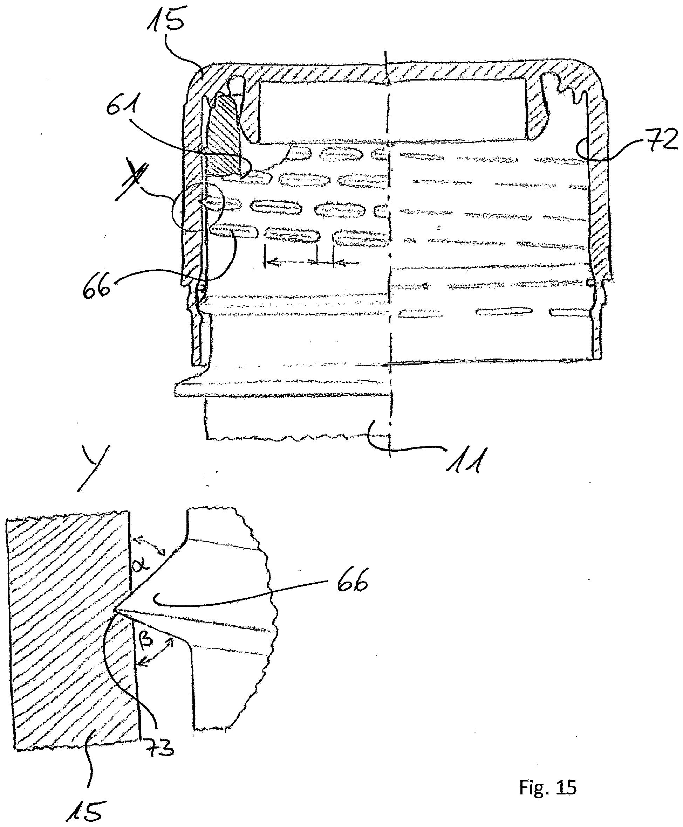

Beim Ausführungsbeispiel der Fig. 15 liegt eine Verschlusskappe (15) vor, die innenseitig, d.h. auf ihrer dem Behälter (11) zugewandten Kappenseite, eine glatte Innenfläche (72) aufweist. Der Behälter (11) weist ein Außengewinde (61) auf mit scharfkantigen Gewindegraten (73), die zum Beispiel erneut als Gewindelamellen (66) ausgeführt sind. Auch hier sind die Gewindeflankenwinkel (α) und (β) unterschiedlich gewählt, um ein Aufdrücken der Verschlusskappe (15) auf den Behälter (11) zu begünstigen. Aufgrund der spitzkantigen Ausführung der Gewindelamellen (66) drücken sich die Gewindelamellen (66) des Behälters in die glatte Innenseite (72) der Kappe (15) hinein und bei einem Aufdrehen der Verschlusskappe (15) vom Behälter (11) furchen die Gewindelamellen (66) ein Gewinde in die Kappe (15).

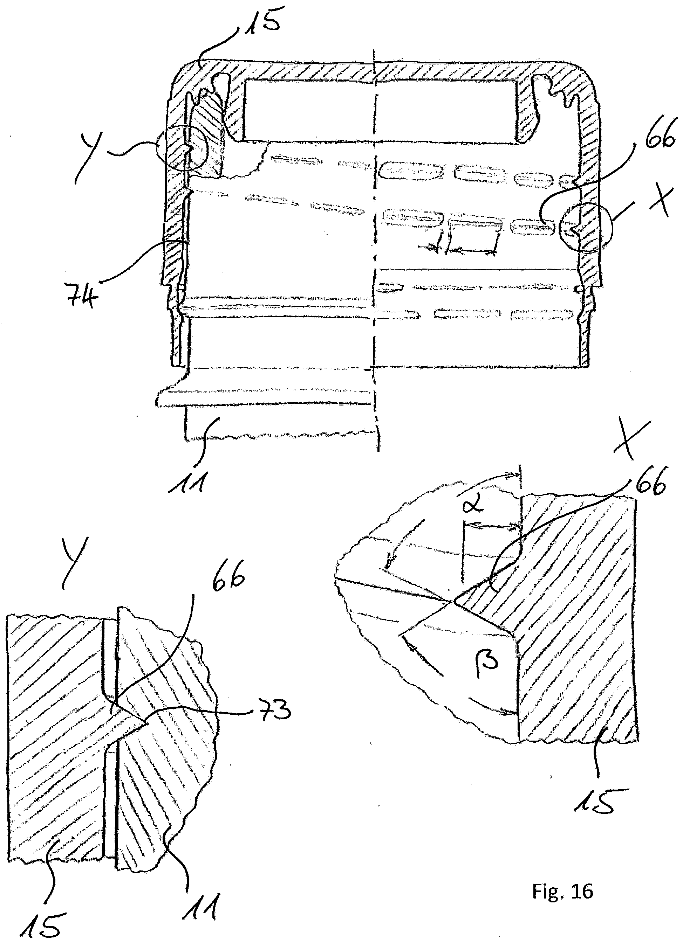

Fig. 16 zeigt eine Umkehrung dieses Prinzips. In diesem Ausführungsbeispiel ist nunmehr die Außenseite (74) des Behälters (11) in seinem Mündungsabschnitt (5) glattflächig ausgebildet, während innenseitig auf der dem Behälter (11) zugewandten Seite der Verschlusskappe (15) scharfkantige Gewindelamellen (66) ausgeführt sind. Auch hier drücken sich diese scharfkantigen Gewindelamellen (66) nach dem Aufdrücken auf den Mündungsbereich (5) des Behälters (11) in die vormals glatte Außenfläche (74) der Behältermündung (5) ein und erzeugen bei öffnendem Aufschrauben der Verschlusskappe (15) außenseitig am Behälter (11) Gewindefurchen.

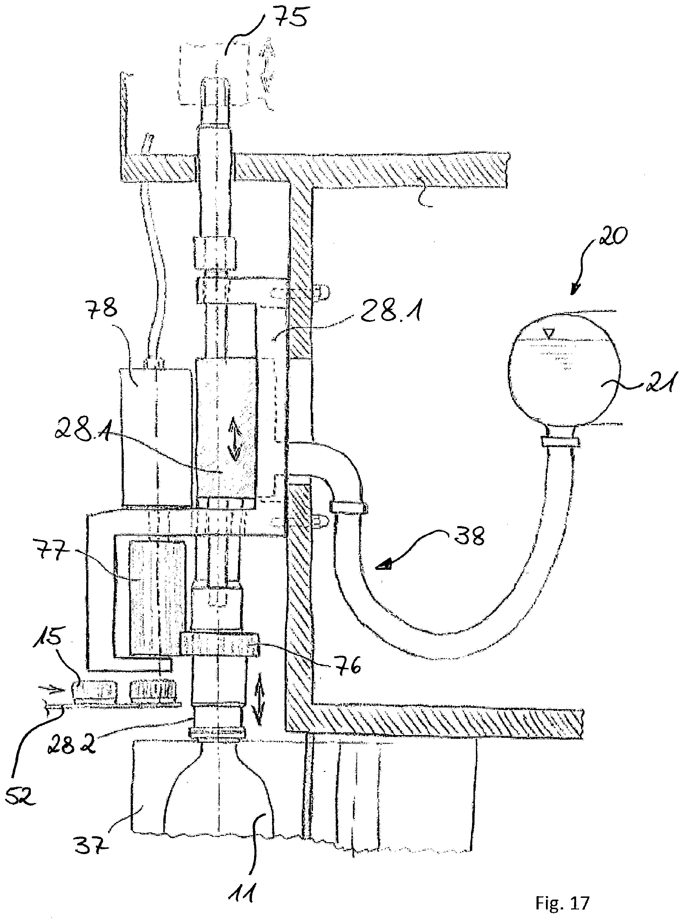

Fig. 17 zeigt in einer schematischen Darstellung eine erfindungsgemäße Form- und Füllmaschine zur Durchführung der hydraulischen Behälterformung unter Verwendung eines Füllgutes (21) mit einem weiteren Ausführungsbeispiel einer Verschließeinrichtung (38). Wie auch schon anhand von Fig. 1 erläutert wird einem Form- und Füllkopf (28) von einer Vorratseinrichtung (20) Füllgut (21) unter Druck zugeführt. Der Form- und Füllkopf (28) ist mit einer Antriebseinrichtung (75) versehen, um erforderliche Hubbewegungen ausführen zu können, nämlich um zum Beispiel die anhand der Figuren 6 - 11 erläuterten Positionierungen einnehmen zu können. Die Antriebseinrichtung (75) des Form- und Füllkopfes (28) ist entsprechend angesteuert und bei dieser Antriebseinrichtung (75) kann es sich beispielsweise um eine elektrische Antriebseinrichtung handeln, zum Beispiel um einen Linearmotor.

In Fig. 17 dargestellt ist der Form- und Füllkopf (28) in seiner Abdichtpositionierung, die prinzipienhaft auch in Fig. 6 dargestellt ist, d.h. der Form- und Füllkopf (28) liegt dichtend auf dem Behälter (11) auf, der in einer Form (37) aufgenommen ist. Die Ausformung des Vorformlinges (2) in den Behälter (11) ist abgeschlossen und die Antriebseinrichtung (75) könnte nunmehr den Form- und Füllkopf (28) vom Behälter (11) abheben und zum Beispiel in die in Fig. 8 dargestellte Positionierung verfahren. Nach einem solchen Verfahren könnte dann die Zuführschiene (52) mit darauf angeordneten Verschlusskappen (15) in den Bereich zwischen Behältermündung (5) und Form- und Füllkopfunterseite (28) vorgeschoben werden und die weiteren anhand der Figuren 9 - 11 erläuterten Verschließschritte könnten ausgeführt werden.

Gemäß dem Ausführungsbeispiel der Fig. 17 weist der Form- und Füllkopf (28) außenseitig ein Zahnrad (76) auf, das mit einem Antriebszahnrad (77) in kämmendem Eingriff steht. Dieses Antriebszahnrad (77) kann zum Beispiel motorgetrieben in Drehung versetzt werden und dadurch den Form- und Füllkopf (28) in Drehung versetzen. Bevorzugt wird dazu der Form-und Füllkopf (28) in einem behälterseitigen Abschnitt (28.2) drehbar ausgeführt sein, während ein anderer Abschnitt (28.1) des Form- und Füllkopfes (28) drehfest ausgeführt ist. Der Form- und Füllkopf (28) wäre also in einen drehbaren Abschnitt (28.2) und in einen drehfesten Abschnitt (28.1) zu unterteilen, die drehbar aneinander gelagert sind.

Das zu den Figuren 6 - 11 erläuterte Aufdrücken der Verschlusskappe (15) auf den Behälter (11) könnte bei der Ausführungsform der Fig. 17 abschließend ergänzt werden durch eine Aufschraubbewegung. Wie zu den Figuren 6 -11 erläutert könnte zunächst eine Verschlusskappe (15) durch eine absenkende Bewegung des Form- und Füllkopfes (28) auf den Behälter (11) gedrückt werden. Bei Erreichen einer bestimmten Aufdrückpositionierung könnte sodann das äußere Zahnrad (77) motorangetrieben in Drehung versetzt werden und den drehbaren, das Zahnrad (76) tragenden Kopfbereich (28.2) in Rotation versetzen, sodass die davon getragene Verschlusskappe (15) ebenfalls in Drehung versetzt wird und dadurch zum Beispiel zum Ende des Verschließvorganges hin auf den gefüllten Behälter (11) aufgeschraubt wird, zum Beispiel bis zum Erreichen der in Fig. 11 dargestellten endgültigen Verschlusspositionierung. Denkbar ist zum Beispiel, dass in einem ersten Verschließschritt die Kappe (15) vom Form- und Füllkopf (28) so weit auf den Behälter (11) aufgedrückt wird, bis ein erster Gewindeeingriff zwischen Kappe (15) und Außengewinde (61) am Behälter (11) erreicht ist und danach das äußere Zahnrad (77) drehangetrieben wird. Der Antrieb (78) des externen Zahnrades (77) kann zum Beispiel als Servomotor ausgebildet sein.

**Bezugszeichenliste**

| | | | |
|---|---|---|---|
| | | 35 | Lager |
| 1 | Zuführeinrichtung | 36 | Zuführöffnung |
| 2 | Vorformling | 37 | Form |
| 3 | Übergaberad | 38 | Verschließeinrichtung |
| 4 | Heizeinrichtung | 39 | Greifer |
| 5 | Mündungsabschnitt | 40 | Werkzeugträger |
| 6 | Heizelement | 41 | Drehachse |
| 7 | Transporteinrichtung | 42 | Leitung oder Leitungsstrecke |
| 8 | Übergaberad | 43 | Karbonisierungseinheit |
| 9 | Arbeitsrad | 44 | Kühlungseinheit |
| 10 | Form- und Füllstation | 45 | Neckring |
| 11 | Behälter | 46 | Anschlagplatte |
| 12 | Entnahmerad | 47 | Eingabespalt |
| 13 | Ausgabestrecke | 48 | Dichtungshubweg |
| 14 | Eingabeeinrichtung | 49 | Länge Mündungsabschnitt |
| 15 | Verschlusskappe | 50 | Kappenzuführeinrichtung |
| 16 | Abschottungseinrichtung | 51 | Behältermündung |
| 17 | Reckstange | 52 | Führungsschiene |
| 17.1 | Verengung | 53 | Ladefinger |
| 18 | Kuppe der Reckstange | 54, 55 | Spalt |
| 19 | Boden des Vorformlings | 56 | Ausnehmung |
| 20, 20.1 | Vorratseinrichtung | 57 | Dichtring |
| 21, 21.1 | Füllgut | 58 | Garantiering |
| 22 | Dosierventil | 59 | Sicherungsring |
| 23 | Innenraum der Reckstange | 60 | Innengewinde Kappe |
| 24 | Auslassöffnung | 61 | Außengewinde Behälter/Vorformling |
| 25 | Rückschlagventil | 65 | Gewindefurche |
| 26 | Entlüftungsventil | 66 | Gewindelamelle |
| 27 | Auslassöffnung | 67 | Unterbrechung |
| 28 | Form- und Füllkopf | 70, 71 | Flanke Gewindelamelle |
| 29 | Dichtung | 72 | Innenfläche |
| 30 | Innenraum des Vorformlings | 73 | Gewindegrate |
| 31 | Ringspalt | 74 | Außenfläche |
| 32 | Längsachse der Flasche bzw. | 75 | Antriebseinrichtung |
| | Reckstange | 76, 77 | Zahnrad |
| 33 | Dichtelement | 78 | Antrieb |
| 34 | Gegenelement | ***** | |

## Patentansprüche

1. Verschließsystem für die Verwendung beim Herstellen von mit einem flüssigen Füllgut (21, 21.1) gefüllten und mit einer Verschlusskappe (15) verschlossenen Behältern (11), bestehend aus einem Behälter (11) und einer Schraubverschlusskappe (15), wobei zwischen dem Behälter (11) und der Verschlusskappe (15) in einem Verbindungsbereich (60, 61) eine Schraubverbindung ausbildbar ist, indem dort entsprechende Gewindezüge (66) und/oder Gewindefurchen (65) ausgebildet sind, wobei einer der Partner der Schraubverbindung im Bereich der Schraubverbindung (60, 61) zunächst gewindefrei ausgeführt ist, wobei der andere Verbindungspartner hingegen in diesem Verbindungsbereich (60, 61) ein Gewinde mit als Schneidmittel ausgebildeten, scharfkantigen Gewindezügen (73, 66) aufweist, **dadurch gekennzeichnet, dass** die Gewindezüge (66) segmentiert ausgeführt sind.

2. Verschließsystem nach Anspruch 1, **dadurch gekennzeichnet, dass** die als Schneidmittel ausgebildeten, scharfkantigen Gewindezüge (73, 66) aus einem Material mit größerer Härte, insbesondere mit einer größeren Shore-Härte, ausgeführt sind als der gewindefreie Verbindungsbereich, insbesondere mit einer größeren Shore-Härte als bei der blasformenden Herstellung von Behältern (11) aus Vorformlingen (2) verwendete thermoplastische Kunststoffe, insbesondere als PET.

3. Verschließsystem nach Anspruch 1 oder 2, **dadurch gekennzeichnet, dass** die Verschlusskappe (15) auf seiner Verschlusskappeninnenseite als Schneidmittel ausgebildete, scharfkantige Gewindezüge (66) aufweist.

4. Verschließsystem nach einem der vorstehenden Ansprüche 1 bis 3, **dadurch gekennzeichnet, dass** ein um 360° umlaufender Gewindezug auf dieser Umlaufstrecke in mehr als 4, vorzugsweise in mehr als 6, weiter vorzugsweise in mehr als 8 Segmente (66) unterteilt ist.

5. Verwendung eines Verschließsystems beim Herstellen von mit einem flüssigen Füllgut (21, 21.1) gefüllten und mit einer Verschlusskappe (15) verschlossenen Behältern (11), das Verschließsystem bestehend aus einem Behälter (11) und einer Schraubverschlusskappe (15), wobei zwischen dem Behälter (11) und der Verschlusskappe (15) in einem Verbindungsbereich (60, 61) eine Schraubverbindung ausbildbar ist, indem dort entsprechende Gewindezüge (66) und/oder Gewindefurchen (65) ausgebildet sind, wobei einer der Partner der Schraubverbindung im Bereich der Schraubverbindung (60, 61) zunächst gewindefrei ausgeführt ist, wobei der andere Verbindungspartner hingegen in diesem Verbindungsbereich (60, 61) ein Gewinde mit als Schneidmittel ausgebildeten, scharfkantigen Gewindezügen (73, 66) aufweist, wobei die Verwendung bei der hydraulischen Umformung von thermisch konditionierten Vorformlingen (2) in Behälter (11) und gleichzeitiger Befüllung mit einem flüssigen Füllgut (21, 21.1) erfolgt, das als hydraulisches Druckmedium dient, wobei noch innerhalb einer Form- und Füllstation (10), in der der Vorformling (2) durch Einleiten des Füllgutes (21, 21.1) unter Druck in den Behälter (11) umgeformt wird, der Behälter (11) mit der Verschlusskappe (15) versehen wird bevor der fertig geformte und gefüllte Behälter (11) aus der Form- und Füllstation (10) entnommen wird, indem die Verschlusskappe (15) auf den Mündungsbereich (5) des Behälters (11) gedrückt wird, sodass die Verschlusskappe (15) nach dem Aufdrücken den Behälter (11) zumindest vorläufig verschließt.

6. Verwendung nach Anspruch 5, **dadurch gekennzeichnet, dass** die Verschlusskappe (15) durch eine Aufdrückbewegung eines Form- und Füllkopfes (28) der Form- und Füllstation (10) auf den Mündungsbereich (5) des fertig geformten Behälters (11) gedrückt wird.

7. Verwendung nach Anspruch 6, **dadurch gekennzeichnet, dass** der Form- und Füllkopf (28) aus einer Ruhepositionierung, die ein Zuführen und Einsetzen des Vorformlinges (2) in eine Form (37) der Form- und Füllstation (10) erlaubt, in eine Abdichtpositionierung zum Vorformling (2) bewegt wird, wobei der Vorformling (2) während der Umformung in den Behälter (11) vorzugsweise mindestens zeitweilig durch eine Reckstange (17) geführt und in Achsrichtung gereckt wird, wobei die Verschlusskappe (15) von einer Kappenzuführeinrichtung (50) in den Bereich der Form- und Füllstation (10) zugeführt wird.

8. Verwendung nach Anspruch 7, **dadurch gekennzeichnet, dass** der Form- und Füllkopf (28) nach Abschluss der Form- und Füllphase von der Abdichtpositionierung in eine vom Behälter (11) beabstandete Positionierung bewegt wird, dann die Verschlusskappe (15) in den Bereich zwischen Behälter (11) und Form- und Füllkopf (28) zugeführt wird, und dann die Verschlusskappe (15) vom Form- und Füllkopf (28) in einer Behälterlängsrichtung (32) auf den Behälter (11) gedrückt wird, um den Behälter (11) zumindest vorläufig zu verschließen.

9. Verwendung nach einem der Ansprüche 6 bis 8, **dadurch gekennzeichnet, dass** der Form- und Füllkopf (28) auf seiner der Form (37) zugewandten Seite mit einer Aufnahmeeinrichtung für eine Verschlusskappe (15) ausgebildet ist und eine zugeführte Verschlusskappe (15) aufnimmt durch Ausführen einer Aufnahmebewegung hin zu der zugeführten Verschlusskappe (15), wobei die aufgenommene Verschlusskappe (15) anschließend auf den Behälter (11) gedrückt wird.

10. Verwendung nach Anspruch 9, **dadurch gekennzeichnet, dass** die Aufnahmeeinrichtung eine am Form- und Füllkopf (28) ausgebildete Ausnehmung (56) ist, die so dimensioniert ist, dass sie eine Verschlusskappe (15) gegen ein Verkippen sichernd aufnimmt.

11. Verwendung nach einem der vorhergehenden Ansprüche 5 bis 10, **dadurch gekennzeichnet, dass** die Kappenzuführeinrichtung (50) eine positionierbare Zuführschiene (52) aufweist, auf der die Verschlusskappen (15) rutschend der Form- und Füllstation (10) zugeführt werden, wobei die Kappenzuführeinrichtung (50) weiterhin bevorzugt einen Ladefinger (53) aufweist zum Bewegen der Verschlusskappe (15) auf der Zuführschiene (52).

12. Verwendung nach einem der vorhergehenden Ansprüche 6 bis 11, **dadurch gekennzeichnet, dass** der Form- und Füllkopf (28) einen drehbaren Kopfabschnitt (28.2) aufweist, der drehbar an einem drehfesten Kopfabschnitt (28.1) angeordnet ist, und der eine Antriebseinrichtung zur Ausführung einer Drehung des drehbaren Kopfabschnittes (28.2) gegenüber dem drehfesten Kopfabschnitt (28.1) aufweist, wobei diese Antriebseinrichtung insbesondere ausgeführt ist als miteinander kämmende Zahnräder (76, 77) mit einem von einem Antriebsmittel (78) angetriebenen Zahnrad (77), wobei der drehbare Kopfabschnitt (28.2) insbesondere ein fest damit verbundenes Zahnrad (76) aufweist, das in kämmendem Eingriff mit einem von dem Antriebsmittel (78) antreibbaren Zahnrad (77) steht, wobei die aufgedrückte Verschlusskappe (15) mittels des drehbaren Kopfabschnitts (28.2) gegenüber dem Behälter (11) gedreht wird, um den Behälter (11) endgültig zu verschließen.

13. Verwendung nach einem der vorhergehenden Ansprüche 5 bis 12, **dadurch gekennzeichnet, dass** die Form- und Füllstation (10) auf einem rotierenden Arbeitsrad (9) angeordnet ist, das im Produktionsbetrieb kontinuierlich umläuft.

14. Verwendung nach einem der vorhergehenden Ansprüche 5 bis 13, **dadurch gekennzeichnet, dass** die Gewindezüge (66) segmentiert ausgeführt sind.

15. Verwendung nach einem der vorhergehenden Ansprüche 5 bis 14, **dadurch gekennzeichnet, dass** das Verschließsystem nach einem der Ansprüche 2 - 4 ausgeführt ist.

## Claims

1. A closure system for the use in the production of containers (11) filled with a liquid filling material (21, 21.1) and closed with a closure cap (15), consisting of a container (11) and a screw cap (15), wherein a screw connection can be formed in a connection area (60, 61) between the container (11) and the closure cap (15) by forming corresponding screw threads (66) and/or thread grooves (65) there, wherein one of the partners of the screw connection in the area of the screw connection (60, 61) is initially designed in a thread-free manner, wherein the other connection partner, however, has a thread with sharp-edged screw threads (73, 66) designed as cutting means in this connection area (60, 61), **characterized in that** the screw threads (66) are designed in a segmented manner.

2. The closure system according to claim 1, **characterized in that** the sharp-edged screw threads (73, 66) designed as cutting means are made of a material with a greater hardness, in particular with a greater Shore hardness, than the thread-free connection area, in particular with a greater Shore hardness than thermoplastics used in the blow molding production of containers (11) from preforms (2), in particular as PET.

3. The closure system according to claim 1 or 2, **characterized in that** the closure cap (15) has sharp-edged screw threads (66) designed as cutting means on the inside of the closure cap.

4. The closure system according to one of the preceding claims 1 to 3, **characterized in that** a 360° circumferential screw thread is divided into more than 4, preferably more than 6, more preferably more than 8 segments (66) on this circumferential path.

5. Use of a closure system in the production of containers (11) filled with a liquid filling material (21, 21.1) and closed with a closure cap (15), the closure system consisting of a container (11) and a screw cap (15), wherein a screw connection can be formed in a connection area (60, 61) between the container (11) and the closure cap (15) by forming corresponding screw threads (66) and/or thread grooves (65) there, wherein one of the partners of the screw connection in the area of the screw connection (60, 61) is initially designed in a thread-free manner, wherein the other connection partner, however, has a thread with sharp-edged screw threads (73, 66) designed as cutting means in this connection area (60, 61), wherein the use is in the hydraulic forming of thermally conditioned preforms (2) into containers (11) and simultaneous filling with a liquid filling material (21, 21.1) which serves as a hydraulic pressure medium, wherein still within a forming and filling station (10) in which the preform (2) is formed by introducing the filling material (21, 21.1) under pressure into the container (11), the container (11) is provided with the closure cap (15) before the finished formed and filled container (11) is removed from the forming and filling station (10) by pressing the closure cap (15) onto the mouth area (5) of the container (11) so that the closure cap (15) closes the container (11) at least temporarily after being pressed on.

6. Use according to claim 5, **characterized in that** the closure cap (15) is pressed onto the mouth area (5) of the finished formed container (11) by a pressing movement of a forming and filling head (28) of the forming and filling station (10).

7. Use according to claim 6, **characterized in that** the forming and filling head (28) moves from a rest position, which allows the preform (2) to be supplied to and inserted into a form (37) of the forming and filling station (10), into a sealing position to the preform (2), wherein the preform (2) is preferably at least temporarily guided by a stretching rod (17) and stretched in the axial direction during the forming into the container (11), wherein the closure cap (15) is supplied to the area of the forming and filling station (10) by a cap supply means (50).

8. Use according to claim 7, **characterized in that** the forming and filling head (28) is moved from the sealing position to a position spaced apart from the container (11) after completion of the forming and filling phase, then the closure cap (15) is supplied to the area between the container (11) and the forming and filling head (28), and then the closure cap (15) is pressed onto the container (11) by the forming and filling head (28) in a container longitudinal direction (32) in order to close the container (11) at least temporarily.

9. Use according to one of claims 6 to 8, **characterized in that** the forming and filling head (28) is formed on its side facing the form (37) with a receiving means for a closure cap (15) and receives a supplied closure cap (15) by executing a receiving movement towards the supplied closure cap (15), wherein the received closure cap (15) is then pressed onto the container (11) .

10. Use according to claim 9, **characterized in that** the receiving means is a recess (56) formed on the forming and filling head (28), which is dimensioned such that it receives a closure cap (15) so that it is secured against tilting.

11. Use according to one of the preceding claims 5 to 10, **characterized in that** the cap supply means (50) has a positionable supply rail (52) on which the closure caps (15) are supplied to the forming and filling station (10) in a sliding manner, wherein the cap supply means (50) further preferably has a loading finger (53) for moving the closure cap (15) on the supply rail (52).

12. Use according to one of the preceding claims 6 to 11, **characterized in that** the forming and filling head (28) has a rotatable head section (28.2) which is rotably arranged on a non-rotatable head section (28.1) and which has a drive means for executing a rotation of the rotatable head section (28.2) in relation to the non-rotatable head section (28.1), wherein this drive means is in particular designed as gear wheels (76, 77) meshing with one another, with a gear wheel (77) driven by a driving element (78), wherein the rotatable head section (28.2) in particular has a gear wheel (76) firmly connected thereto, which is in meshing engagement with a gear wheel (77) that can be driven by the driving element (78), wherein the pressed-on closure cap (15) is rotated in relation to the container (11) by means of the rotatable head section (28.2) in order to definitively close the container (11).

13. Use according to one of the preceding claims 5 to 12, **characterized in that** the forming and filling station (10) is arranged on a rotating work wheel (9) which rotates continuously during the production operation.

14. Use according to one of the preceding claims 5 to 13, **characterized in that** the screw threads (66) are designed in a segmented manner.

15. Use according to one of the preceding claims 5 to 14, **characterized in that** the closure system is designed according to one of claims 2-4.

## Revendications

1. Système d'obturation pour utilisation lors de la production de récipients (11) remplis d'un produit de remplissage liquide (21,21.1) et fermés avec un capuchon de fermeture (15), comportant un récipient (11) et un capuchon de fermeture fileté (15), un assemblage vissé pouvant être réalisé dans une zone de liaison (60, 61) entre le récipient (11) et le capuchon de fermeture (15) par formation de filets (66) et/ou de rainures de filetage (65) correspondants, l'un des partenaires de l'assemblage vissé dans la zone d'assemblage vissé (60, 61) étant tout d'abord réalisé sans filetage, l'autre partenaire d'assemblage dans cette zone de liaison (60, 61) présentant par contre un filetage doté de filets (73, 66) à crêtes tranchantes faisant fonction de moyens de coupe, **caractérisé en ce que** les filets (66) sont segmentés.

2. Système d'obturation selon la revendication 1, **caractérisé en ce que** les filets (73, 66) à crêtes tranchantes faisant fonction de moyens de coupe sont réalisés en un matériau de dureté et notamment de dureté Shore supérieure à celle de la zone de liaison sans filetage, notamment avec une dureté Shore supérieure à celle des matériaux thermoplastiques, notamment le PET, utilisés pour la fabrication par moulage par soufflage de récipients (11) à partir de préformes (2).

3. Système d'obturation selon la revendication 1 ou 2, **caractérisé en ce que** le capuchon de fermeture (15) présente sur sa face intérieure des filets (66) à crêtes tranchantes faisant fonction de moyens de coupe.

4. Système d'obturation selon l'une des revendications précédentes 1 à 3, **caractérisé en ce qu'**un filet s'étendant sur 360° est subdivisé sur cette longueur en plus de 4, de préférence en plus de 6, de préférence en plus de 8 segments (66).

5. Utilisation d'un système d'obturation lors de la production de récipients (11) remplis d'un produit de remplissage liquide (21,21.1) et fermés avec un capuchon de fermeture (15), le système d'obturation comportant un récipient (11) et un capuchon de fermeture fileté (15), un assemblage vissé pouvant être réalisé dans une zone de liaison (60, 61) entre le récipient (11) et le capuchon de fermeture (15) par formation de filets (66) et/ou de rainures de filetage (65) correspondants, l'un des partenaires de l'assemblage vissé dans la zone d'assemblage vissé (60, 61) étant tout d'abord réalisé sans filetage, l'autre partenaire d'assemblage dans cette zone de liaison (60, 61) présentant par contre un filetage doté de filets (73, 66) à crêtes tranchantes faisant fonction de moyens de coupe, le système étant utilisé lors du formage hydraulique de préformes (2) thermiquement conditionnées en récipients (11) et leur remplissage simultané avec un produit de remplissage liquide (21, 21.1) faisant fonction d'agent de pression hydraulique, le récipient (11) étant muni du capuchon de fermeture (15) à l'intérieur même d'une station de moulage et de remplissage (10) dans laquelle la préforme (2) est transformée en récipient (11) par l'introduction du produit de remplissage (21, 21.1) sous pression, le capuchon de fermeture (15) étant appuyé sur la section d'embouchure (5) du récipient (11) avant que le récipient (11) formé et rempli ne soit extrait de la station de moulage et de remplissage (10) de sorte à obturer le récipient (11) au moins provisoirement.

6. Utilisation selon la revendication 5, **caractérisée en ce que** le capuchon de fermeture (15) est pressé sur la section d'embouchure (5) du récipient (11) fini par un mouvement de pression d'une tête de moulage et de remplissage (28) de la station de moulage et de remplissage (10).

7. Utilisation selon la revendication 6, **caractérisée en ce que** la tête de moulage et de remplissage (28), partant d'un positionnement de repos qui permet l'amenée et l'introduction de la préforme (2) dans un moule (37) de la station de moulage et de remplissage (10), est déplacée vers la préforme (2) en un positionnement d'étanchéification, la préforme (2) étant, de préférence au moins temporairement pendant sa transformation en récipient (11), guidée et est étirée en direction axiale par une barre d'étirage (17), le capuchon de fermeture (15) étant amené dans la zone de la station de moulage et de remplissage (10) par un dispositif d'amenée de capuchons (50).

8. Utilisation selon la revendication 7, **caractérisée en ce que,** après achèvement de la phase de moulage et de remplissage, la tête de moulage et de remplissage (28) est déplacée du positionnement d'étanchéification vers un positionnement à une certaine distance du récipient (11), après quoi le capuchon de fermeture (15) est amené dans la zone entre le récipient (11) et la tête de moulage et de remplissage (28), le capuchon de fermeture (15) étant alors appuyé sur le récipient (11) en direction longitudinale (32) de celui-ci par la tête de moulage et de remplissage (28) pour obturer le récipient (11) au moins provisoirement.

9. Utilisation selon l'une des revendications 6 à 8, **caractérisée en ce que** la tête de moulage et de remplissage (28) est dotée, sur son côté orienté vers le moule (37), d'un dispositif de réception pour un capuchon de fermeture (15) et, par l'exécution d'un mouvement de préhension vers ce capuchon de fermeture (15) amené, recueille le capuchon de fermeture (15), lequel capuchon de fermeture (15) est alors appuyé sur le récipient (11).

10. Utilisation selon la revendication 9, **caractérisée en ce que** le dispositif de réception est un évidement (56) formé sur la tête de moulage et de remplissage (28) dimensionné de façon telle qu'un capuchon de fermeture (15) peut être recueilli et maintenu sans qu'il puisse basculer.

11. Utilisation selon l'une des revendications précédentes 5 à 10, **caractérisée en ce que** le dispositif d'amenée de capuchons (50) présente une glissière d'amenée (52) pouvant être positionnée et sur laquelle les capuchons de fermeture (15) sont amenés par glissement vers la station de moulage et de remplissage (10), le dispositif d'amenée de capuchons (50) présentant en outre de préférence un doigt de chargement (53) pour mouvoir le capuchon de fermeture (15) sur la glissière d'amenée (52).

12. Utilisation selon l'une des revendications précédentes 6 à 11, **caractérisée en ce que** la tête de moulage et de remplissage (28) présente une section de tête rotative (28.2), laquelle est agencée sur une section de tête non rotative (28.1) et présente un dispositif d'entraînement pour l'exécution d'une rotation de la section de tête rotative (28.2) par rapport à la section de tête non rotative (28.1), ce dispositif d'entraînement étant notamment réalisé sous forme de roues dentées (76, 77) engrenées dont une roue dentée (77) est entraînée par un moyen d'entraînement (78), la section de tête rotative (28.2) présentant notamment une roue dentée (76) qui y est reliée de manière fixe et s'engrène avec une roue dentée (77) entraînable par le moyen d'entraînement (78), le capuchon de fermeture (15) pressé sur le récipient étant entraîné en rotation par rapport au récipient (11) au moyen de la section de tête rotative (28.2) pour obturer définitivement le récipient (11).

13. Utilisation selon l'une des revendications précédentes 5 à 12, **caractérisée en ce que** la station de moulage et de remplissage (10) est agencée sur une roue de travail (9) en rotation continue en mode de production.

14. Utilisation selon l'une des revendications précédentes 5 à 13, **caractérisée en ce que** les filets (66) sont segmentés.

15. Utilisation selon l'une des revendications précédentes 5 à 14, **caractérisée en ce que** le système d'obturation est réalisé selon l'une des revendications 2 à 4.
